# EUROPEAN PATENT APPLICATION

(11) **EP 4 538 926 A1**
(43) Date of publication of application: **16.04.2025**
(21) Application number: 24199105.8
(22) Date of filing: 09.09.2024
(51) Int. Cl.: G06F 40/30

(54) **SUPPLEMENTATION OF LARGE LANGUAGE MODEL KNOWLEDGE VIA PROMPT MODIFICATION**

(30) Priority: 15.09.2023 US 202318369065
(71) Applicant: SAP SE, 69190 Walldorf (DE)
(72) Inventor: Portisch, Jan, 69190 Walldorf (DE); Costa, Guilherme, 69190 Walldorf (DE); Hladik, Michael, 69190 Walldorf (DE); Sahu, Deepak, 69190 Walldorf (DE); Reitemeier, Yannis, 69190 Walldorf (DE)
(74) Representative: Müller-Boré & Partner Patentanwälte PartG mbB

(57) **Abstract**

The present disclosure provides techniques and solutions for automatically and dynamically supplementing user prompts to large language models with information to be used by the large language model in formulating a response. In particular, entities are identified in the original prompt. A semantic framework is searched for information about such entities, and such information is added to the original user prompt to provide a modified user prompt. In a particular example, the identified entities comprise triples, and verbalized triples are added to provide the modified user prompt. The modified prompt may be hidden from the user, so that a response of the large language model appears to be in response to the original prompt.

## Description

### FIELD

The present disclosure generally relates to interactions with large language models. Particular implementations relate to searching for information relevant to a prompt and modifying the prompt to include such information prior to submitting the prompt to a large language model.

### BACKGROUND

Large language models are a revolutionary technology rapidly integrating into the daily lives of millions of people. These models, often referred to as "chatbots," possess the remarkable ability to process and comprehend natural human language input. They can then generate responses in the same fluid human language, making interactions with them highly accessible. The user-friendly nature of these models, which facilitate effortless input and deliver understandable responses, combined with their remarkable accuracy, contributes to their exceptional power and ease of adoption.

Nonetheless, large language models do face certain challenges. One such challenge involves their accuracy being contingent on relevant training data. If the most pertinent data for a specific query is not publicly available, such as residing within corporate information repositories, the model may either fail to provide an answer or provide an answer that is incorrect-sometimes referred to as "hallucinating." Further, considering the time and resources required for training, these models may not be updated frequently. Consequently, an information gap might arise between the model's last training instance and its actual usage. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present disclosure provides techniques and solutions for automatically and dynamically supplementing user prompts to large language models with information to be used by the large language model in formulating a response. In particular, entities are identified in the original prompt. A semantic framework is searched for information about such entities, and such information is added to the original user prompt to provide a modified user prompt. In a particular example, the identified entities comprise triples, and verbalized triples are added to provide the modified user prompt. The modified prompt may be hidden from the user, so that a response of the large language model appears to be in response to the original prompt.

In one aspect, the present disclosure provides a process of modifying user input to a large language model to include supplemental facts for use by the large language model prior to submitting the user input to the large language model. User input is received from a user. The user input includes a plurality of tokens. At least a portion of the plurality of tokens are analyzed. Based on the analyzing, one or more entities of a semantic framework are determined that are represented in the at least a portion of the plurality of tokens. One or more triples of the semantic framework are determined for at least a portion of the one or more entities or for associated entities. At least a portion of the one or more triples, or a representation thereof, is added to the user input to provide modified user input. The modified user input is submitted to a large language model. The modified user input is processed using the large language model to provide a response. The response is returned in response to the receiving the user input.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 shows an exemplary directed graph.
FIG. 2 shows the domain and range of a property in a schema of a directed graph.
FIG. 3 shows an exemplary SPARQL query and results of the query.
FIG. 4 shows a block diagram notation for subsequent figures.
FIG. 5 shows Crow's Foot notation for annotation in subsequent figures.
FIG. 6 shows an exemplary system architecture for a method according to some embodiments.
FIG. 7 shows an algorithm for computing strings from a directed graph for input to a language model.
FIG. 8 shows a sorting algorithm for sorting statements of a directed graph.
FIG. 9 shows a directed graph that may be provided as input to the sorting algorithm.
FIG. 10 shows a relationship between a condition and one or more patterns.
FIG. 11 is a flowchart of a process of creating a domain data model, including mapping elements of the domain data model to elements of a core data model.
FIG. 12 shows the algorithm of FIG. 7 expanded to handle question patterns.
FIG. 13 shows an implementation of the method for providing data from a directed graph to a language model implemented as a remote service.
FIG. 14 shows a hybrid implementation of the method for providing data from a directed graph to a language model.
FIG. 15 shows an on-premises implementation of the method for providing data from a directed graph to a language model.
FIG. 16 illustrates results provided by a large language model when the model lacks sufficient information to properly respond to user input. FIG. 16 also illustrates how disclosed innovations can provide the large language model with additional information to be used in responding to the user input, and a response produced thereby.
FIG. 17 is a flowchart of a process of determining information relevant to user input to a large language model, supplementing the user input with such information, and linking an answer to the supplemented user input to entities in a knowledge graph.
FIG. 18A illustrates how elements of modified user input can be mapped to: the original user input, facts retrieved from a search for information about entities identified in the original user input, and additional instructions that can be added to the original user input prior to submitting the modified user input to a large language model.
FIGS. 18B and 18C illustrate user interface screens that display information for a recognized entity in a response of a large language model in response to user selection of such an entity.
FIG. 19 illustrates an example knowledge graph query and example subject, object, predicate triples produced therefrom.
FIG. 20 illustrates an example function to verbalize knowledge graph triples, and example verbalized triples that can be generated using the knowledge graph triples of FIG. 19.
FIG. 21 is an example knowledge graph.
FIGS. 22A-22C provide example code for querying a knowledge graph.
FIG. 23 illustrates an example computing environment in which disclosed techniques can be implemented.
FIG. 24 is a flowchart of a process of modifying user input to a large language model to include supplemental facts for use by the large language model prior to submitting the user input to the large language model.
FIG. 25 is a diagram of an example computing system in which some described embodiments can be implemented.
FIG. 26 is an example cloud computing environment that can be used in conjunction with the technologies described herein.

### DETAILED DESCRIPTION

### Example 1- Overview

Large language models are a revolutionary technology rapidly integrating into the daily lives of millions of people. These models, often referred to as "chatbots," possess the remarkable ability to process and comprehend natural human language input. They can then generate responses in the same fluid human language, making interactions with them highly accessible. The user-friendly nature of these models, which facilitate effortless input and deliver understandable responses, combined with their remarkable accuracy, contributes to their exceptional power and ease of adoption.

Nonetheless, large language models do face certain challenges. One such challenge involves their accuracy being contingent on relevant training data. If the most pertinent data for a specific query is not publicly available, such as residing within corporate information repositories, the model may either fail to provide an answer or provide an answer that is incorrect-sometimes referred to as "hallucinating." Further, considering the time and resources required for training, these models may not be updated frequently. Consequently, an information gap might arise between the model's last training instance and its actual usage. Accordingly, room for improvement exists.

The present disclosure provides techniques that can be used to influence a result provided by a large language model. For example, the large language model can be provided with a set of "facts" that it can use in whole or part to generate a response. As used in this context, "facts" refers to information that the large language model will use in preparing a response, regardless of whether the information is actually true or not. In some cases, the large language model can be told to explicitly assume that the "facts" are true, such as to bypass functionality of the large language model that might otherwise question the veracity of the information. Similarly, if desired, the large language model can be told to provide a response only using the explicitly provided facts.

The present disclosure provides a technique where a set of facts are determined from an initial user input, and added to the user input to provided modified user input, and where the large language model will respond to the modifier user input. That is, the initial user input can be "intercepted" and modified before submission to a large language model. The user input includes a plurality of tokens that can be analyzed. As used herein, a "token" of user input refers to a discrete unit of text or character sequence within the user input, including tokens that can be analyzed by a named entity recognition service. Tokenization can be achieved by scanning a text and segmenting it at specific boundaries, such as spaces or punctuation marks, to isolate distinct units, or tokens, which can then be subjected to various linguistic analyses or computational operations.

In a specific implementation, the user input is provided to a named entity recognition service that accesses one or more knowledge graphs. Information from the knowledge graphs can be the basis of the additional facts that are provided in the modified user input. In a specific example, information from the knowledge graphs can be "verbalized" before being added to the user input. That is, large language models are designed to work with normal, human language input. Converting "raw" results from a search of a knowledge graph into a verbalized form, even a simple form, can improve the results obtained from the large language model using the modified user input.

The knowledge graph can also be used to enhance the usefulness of a response. For example, a response can be submitted to a named entity recognition service, and the response can be linked to particular information in the knowledge graph (or information outside of the knowledge graph that was identified using the knowledge graph, such as by performing a query of another data source, using results from searching the knowledge graph for entities identified by the named entity recognition service).

Example 2 provides a general discussion of knowledge graphs, as well as a specific technique that can be used to convert elements retrieved from a knowledge graph into a verbalized format. Examples 3-9 describe various techniques according to the present disclosure for modifying user input with content that may not be known to a large language model. The described innovations can be used in various other ways, for example, a set of "stipulated facts" can be provided to the large language model regardless of whether the information may be part of the training corpus of the large language model.

While disclosed techniques are generally described with reference to knowledge graphs as the source of additional information to be added to a prompt, and used by a large language model in formulating a response, these techniques can use information maintained in another format. Generally, these techniques retrieve information from a "semantic framework," where the semantic framework can be a knowledge graph, or can instead use technologies such as ontologies, other types of semantic webs, semantic databases, graph databases, linked data, or taxonomies or folksonomies.

Similarly, aspects of the present disclosure are described as being implemented using the Resource Description Framework. However, other types of data structures or representations can be used that convey equivalent information about semantic relationships or associations, such as expressing two related entities and a relationship between such entities.

### Example 2- Example Verbalization of Knowledge Graph Triples

An enterprise may have a variety of different products, services, and teams. The enterprise may also have a comprehensive knowledge graph, storing knowledge regarding skills, processes, experiences, capabilities, and insights that are relied upon in day-to-day operations of the enterprise. Contents of the knowledge graph may also include enterprise specific acronyms, departments of the enterprise, and product specifications. The knowledge may enable the enterprise to react to business situations in a fast, professional, and flexible manner. The knowledge graph may be expensive and labor intensive to construct and maintain. The knowledge graph (i.e., semantic web and/or web of linked data) may be specified using the Resource Description Framework (RDF).

In some cases, a user would like to ask questions of or provide tasks to a language model, e.g., a large language model based on a generative pre-trained transformer, such as ChatGPT. However, the language model is typically trained in an unsupervised manner on unlabeled human readable text. Hence, the language model may be unable to directly process a knowledge graph or use a knowledge graph as input, e.g., for training.

Accordingly, it may be desirable to maximize the usability of the knowledge graph, for example, using the knowledge graph as a basis for artificial intelligence applications, more particularly, to train or otherwise improve a language model. Upon training the language model, the language model may be used to answer questions or carry out tasks based on the knowledge stored in the knowledge graph.

In addition, it may be desirable to extract human readable text from the knowledge graph, e.g., for use in explaining answers provided by software (e.g., a process advisor) relying on the knowledge graph.

According to an aspect, a computer implemented method for providing data from a directed graph to a language model is provided. The method comprises defining a plurality of conditions and a plurality of patterns, wherein each of the conditions has at least one corresponding pattern. The method further comprises receiving a subset of the directed graph, wherein the subset of the directed graph includes a plurality of statements. Each of the statements includes a subject, an object and a predicate relating the subject to the object. For each of the statements in the subset of the directed graph, performing the following: when one of the conditions matches a respective statement and the pattern corresponding to the condition can be applied to the respective statement, computing a string for the respective statement using the pattern. Providing the computed strings as input to the language model.

Providing data from the directed graph to the language model may include extracting or reading the data from the directed graph and feeding or sending the data as input to the language model. The statements may be referred to as triples or triple statements, with subject, predicate and object components. A condition may correspond to a respective pattern in the sense that when the condition is determined to be true for a respective statement, it may be determined whether the respective pattern can be applied to the respective statement.

The clause, each of the conditions has at least one corresponding pattern, may be understood to mean that each of the conditions of the plurality of conditions has at least one corresponding pattern of the plurality of patterns. Hence, each one of the conditions of the plurality of conditions may be assigned at least one pattern of the plurality of patterns. Put another way, when a condition has at least one corresponding pattern, the at least one corresponding pattern is assigned to the condition. Moreover, each one of the conditions of the plurality of conditions may be assigned multiple patterns of the plurality of patterns.

The clause, when one of the conditions matches a respective statement and the pattern corresponding to the condition can be applied to the respective statement, may comprise determining whether the at least one pattern corresponding to the condition can be applied to the respective statement. Accordingly, determining whether the at least one pattern corresponding to the condition can be applied to the respective statement may involve determining whether the pattern corresponding to the condition matches the respective statement, i.e., testing whether the respective statement has the characteristics or elements specified by the pattern.

For example, determining whether a pattern can be applied to a statement including a subject may be carried out as follows:

The plurality of conditions may include a first condition:
<?s> <?p> <?o> .
BIND(sap:BusinessActivity AS <?s>)
BIND(rdf:type AS <?p>)

A first pattern may correspond to the first condition:
The <s.rdfs:label> is a business activity.

Since the first pattern includes a reference to a label of a subject s, if the statement including the subject fulfills the first condition, i.e., of being a BusinessActivity, but the subject of the statement does not have a label as required by the first pattern, then the first pattern could not be applied (i.e., would not match) the statement.

Computing the string from the respective statement using the pattern may involve directly outputting text of the pattern and matching pattern operators to components of the statement.

Moreover, when computing the string, not just the respective statement matching the condition but one or more further statements of the subset of the directed graph may be accessed by the pattern corresponding to the condition. In other words, the pattern can consider statements that do not match the condition. Accordingly, the condition may trigger pattern execution for the respective statement, which in turn may trigger processing of at least a portion of the subset of the directed graph (or the entire subset of the directed graph) using the pattern.

The subject, the object and the predicate may be referred to as components of their respective statement. The subject and/or the predicate may be an RDF resource (e.g., the subject and/or predicate may have the resource property of RDF, and may be a type or a label). The object may be a literal (e.g., an RDF literal) having a defined data type, such as string, integer, Boolean or double (as defined in the extensible markup language (XML) schema definition language (XSD)). Regarding RDF, please refer to the RDF specification, "Concepts and Abstract Syntax", https://www.w3.org/TR/rdf11-concepts/

The computed strings may be provided directly to the language model (e.g., in the case of small strings, such as less than 1 GB) or may be serialized to a text file before being provided to the language model (e.g., in the case of terabytes of data computed from a comprehensive directed graph). In summary, the method accepts a subset of a directed graph as input and generates grammatically correct sentences as the computed strings. The method iterates over the input statements (i.e. triples) in the subset of the directed graph and uses the conditions filters to determine which patterns may be applicable to each of the statements. When a condition matches a statement and the statement has the elements required by a pattern corresponding to (e.g., assigned to) the condition, the pattern is applied to the condition. The result of the iteration may be a set of strings, such that a string is computed for each statement in the input. The syntax and interpretation of patterns is discussed in more detail below.

The statements of the directed graph may be close to human language.

Hence, providing the computed strings of as input to the language model may maximize the usability of the subset of the directed graph, for example, by using the subset of the directed graph as a basis for artificial intelligence applications. Once the language model has processed the computed strings, the language model may be used to answer questions or carry out tasks based on knowledge stored in the subset of the directed graph. Accordingly, the time, labor and expense invested to construct the directed graph may be exploited in further ways (e.g., to answer questions or by using the language model.

In addition or alternatively, it may be desirable to extract human readable text from the subset of the directed graph, e.g., for use in explaining answers provided by software (e.g., a process advisor) relying on the subset of the directed graph.

In some cases, each of the conditions includes at least three condition variables (variables appearing in a condition may be referred to as condition variables). Each of the condition variables may correspond to (e.g., store) a different component of a statement. For example, a first one of the condition variables matches the subject, a second one of the condition variables matches the predicate and a third one of the condition variables matches the object. At least one of the condition variables may be bound to at least one value, e.g., to an RDF property. In other words, at least one of the condition variables may specify at least one value (e.g., RDF property) that a component of a statement must have. Each of the condition variables may specify an instance of a class (e.g., an RDF class) or a literal e.g., an RDF literal). An instance of a class may be referred to as an instance. The instance may relate to a specific concept and have a definite article while the class may relate to a generic concept and have an indefinite article.

Each condition may be applied to a statement and may evaluate to TRUE or FALSE. In other words, a condition may return a Boolean value. For example, if the condition evaluates to TRUE, the condition matches the respective statement and it is determined whether the at least one pattern corresponding to the condition can be applied to the respective statement. The following are numbered examples of conditions that may be among the plurality of conditions:
1. <?s> <?p> <?o> .
2. <?s> <?p> <?o> .
   BIND(rdfs:label AS <?p>)
3. <?s> <?p> <?o> .
   <?s> rdf:type sap:BusinessActivity .
   BIND(rdfs:label AS <?p>)
4. <?s> <?p> <?o> .
   <?s> rdf:type sap:BusinessActivity .
   <?o> sap:requires <?r. .
   BIND(rdfs:label AS <?p>)

In the first condition, "<?s>" is a variable corresponding to a subject in the directed graph, "<?p>" is a variable corresponding to a predicate in the directed graph and "<?o>" is a variable corresponding to an object in the directed graph. Hence, the first condition specifies that (i.e., in order for the first condition to evaluate to TRUE) a statement must contain a subject, a predicate and an object. The second condition requires that a statement contains a subject, a predicate and an object and that the predicate is an rdfs:label. The third condition requires that a statement contains a subject, a predicate and an object, that the subject has the property (more specifically, is of type) sap:BusinessActivity and that the predicate is an rdfs:label. The fourth condition requires that a statement contains a subject, a predicate and an object, that the subject has the property (more specifically, is of type) sap:BusinessActivity, that the object has a relation (i.e., a subject-object relation) of "sap:requires" with the object "<?r>" and that the predicate is an rdfs:label. In this connection, "<?r>" is a variable bound to a requirement.

The conditions of the plurality of conditions may function to prevent patterns from being used to compute semantically incorrect strings. In other words, the conditions may be used to ensure that the computed strings are semantically and/or grammatically correct. Accordingly, by assigning patterns to conditions, the cases in which patterns are applied can be limited, thereby ensuring or facilitating computation of semantically correct strings, i.e., sentences. Without conditions, patterns could be applied to compute exemplary fantasy strings such as, "The Harry Potter Book is a business activity.", or "The Star Wars Movie is a business activity." However, the exemplary fantasy strings are semantically incorrect; therefore, the exemplary fantasy strings would not be helpful as input to the language model and could prolong the training of the language model or even cause the language model to produce incorrect output.

In some cases, at least one of the conditions has a plurality of corresponding patterns. Accordingly, computing a string from the respective statement using the pattern may comprise computing a plurality of strings from the respective statement using each pattern corresponding to the condition (i.e., the condition matching the respective statement) that can be applied to the respective statement.

Alternatively, computing a string from the respective statement using the pattern may comprise determining a random order of the patterns corresponding to the condition and computing a string from the respective statement only using a first one in the random order of the patterns that can be applied to the respective statement. For example, patterns 1 to 4 may be ordered 2, 4, 3, 1 and pattern 2 can be applied to the respective statement, hence, pattern 2 is applied to the respective statement.

For example, the plurality of conditions may include a sequenceID condition: <?I1> <SequenceID> <?L1> .

The sequenceID condition may correspond to the following pattern (A):
(A) The sequence identifier of <?I1.rdf:type.rdfs:label> <?I1.rdfs:label> is <?L1>.

Continuing the example, the subset of the directed graph may include the following statements:
1. Emissions Management isA BusinessCapability .
2. BusinessCapability rdfs:label "Business Capability" .
3. EmissionsManagement SequenceID "5".

The sequenceID condition only matches statement (3), since statement (3) includes a "SequencelD" and statements (1) and (2) do not include a "SequenceID".

Pattern (A) can be applied to statements (1), (2) and (3) to compute the following string:
The sequence identifier of Business Capability is 5.

All three statements are needed to compute the string above because statements (1) and (2) provide context information for statement (3).

Hence, as indicated above, when computing the string, not just the respective statement matching the condition but one or more further statements of the subset of the directed graph may be accessed by the pattern corresponding to the condition. In other words, the pattern can consider statements that do not match the condition. Accordingly, the condition triggers the pattern execution for the respective statement.

Moreover, the statements of the subset of the directed graph may be iteratively checked. Accordingly, in the example above statements (1) and (2) do not cause the pattern to be triggered but statement (3) does.

In the present example, determining whether pattern (A) can be applied to statement (3) may include determining context information items of pattern (A), namely:
the label of the type of variable <?I1|
the label of variable <?I1>

Both context information items are not available in statement (3) itself, but instead elsewhere in the subset of the directed graph.

The contextual information exists in the subset of the directed graph in view of statement (3) and pattern (A) can be executed for statement (3).

Whenever the forward dot notation is used, we include additional information that is not existing in the triple itself.

In some cases, each pattern includes one or more of the following:
- at least one variable, wherein the variable specifies (e.g., is bound to) a class, an instance of a class, a literal or a predicate;
- text, such as one or more articles (e.g., grammatical articles that are definite or indefinite);
- at least one property that applies to the variable.

Each pattern may further include a language filter. The literal may specify a numeric value or text, where the literal may conform to the RDF schema class of literal values.

Advantageously, the patterns may enable the combination of static text with variables specifying structures (e.g., the subject, the object and the predicate of one of the statements) of the subset of the directed graph, possibly supplemented with information resulting from materializing the subset of the directed graph.

In addition or alternatively, the patterns may include at least one specific pattern (i.e. custom pattern) and a plurality of default patterns. When a condition corresponding to the specific pattern matches a respective statement and the specific pattern can be applied to the respective statement, computing a string from the respective statement using the pattern may comprise using the specific pattern. When the condition corresponding to the specific pattern does not match the respective statement, the method may further comprise determining whether a condition corresponding to one of the default patterns matches the respective statement. When the condition corresponding to one of the default patterns matches the respective statement, computing a string from the respective statement using the one of the default patterns. Defining the plurality of conditions and the plurality of patterns may further comprise defining at least three conditions and at least three patterns, where at least one of the three patterns is a specific pattern and at least one of the three conditions corresponds to the specific pattern.

The following is an exemplary pattern that may be included in the plurality of patterns:
Text <?I1.rdf:type.rdfs:label> Text

The variable <?I1> may be bound to sap:PrintReceipt. Patterns, such as the exemplary pattern above, may use forward dot notation (also referred to as dot notation) to refer to a field, component or sub-property of a property. This may provide the patterns with an advantage over conventional SPARQL, which does not support forward dot notation, since forward dot notation enables more compact expressions.

Accordingly, the exemplary pattern above could be applied to (e.g., the subset of the directed graph may include) the following three statements:
sap:PrintReceipt rdf:type sap:Task .
sap:Task rdfs:label "Task"@en .
sap:Task rdfs:label "Process Task"@en .

In some cases, after a pattern is applied to a respective statement, the pattern is not applied to further statements matching the pattern, i.e., the further statements in the subset of the directed graph matching the pattern may be skipped. The matching of just one statement and skipping of further statements may be an option that can be configured. For example, as discussed below, the post operator may cause a Cartesian product to be computed.

For example, after a pattern is applied to a respective statement including an rdfs:label for an object, further statements including an rdfs:label for the object may be skipped, i.e., the pattern is not applied to the further statements. Accordingly, computing strings from the statements above using the exemplary pattern would yield the following: "Text Task Text".

At least one of the patterns may include a filter condition and/or a post operator. The filter condition may specify a language. The post operator may cause a Cartesian product to be performed. As another example, the subset of the directed graph may include the following four statements:
sap:PrintReceipt rdf:type sap:Task .
sap:Task rdfs:label "Task"@en .
sap:Task rdfs:label "Process Task"@en .
sap:Task rdfs:label "Schritt"@de .

The following further exemplary pattern may be included in the plurality of patterns and may be applied to the four statements above:
Text <?I1.rdf:type.rdfs:label(lang = `en')*> Text

The further exemplary pattern above includes a filter condition to specify a language and an asterisk post operator "*" that yields a cartesian product. The cartesian product may yield all possible combinations of the preceding elements. Accordingly, the following strings would be computed by applying the further exemplary pattern including the cartesian product, since the further exemplary pattern is directed to English labels and there are two English labels among the four statements above:
Text Task Text
Text Process Task Text

Hence, the statement above including "'Schritt' @de" would not be processed since the statement does not meet the filter condition in the further exemplary pattern (i.e., the statement is not in the English language). Without the asterisk post operator in the further exemplary pattern above, only the first string "Text Task Text" would be computed.

The exemplary pattern and further exemplary pattern above may be specific patterns, i.e., patterns applicable to one directed graph or a group of directed graphs.

The strings may be computed from the respective statements using only default patterns. However, use of the specific patterns may result in computed strings that more accurately and precisely describe the contents of the subset of directed graph.

Other post operators (i.e., operators provided at the end of a pattern, also referred to as postfix operators) in addition to the asterisk may also be used. For example, an additional post operator might limit the output of a cartesian product to a specified number of combinations, e.g., about 10 combinations.

As another example, the following requirement pattern may be applied to the four statements above:
The <?I1.rdf:type.rdfs:label(lang = `en')*> <?I1.rdfs:label> requires a <?I2.rdfs:label> .

In this example, <?I1> may be bound to sap:PrintReceipt and <?I2> may be bound to sap:Printer. Hence, by applying the requirement pattern to the four statements above, the following strings may be computed:
- The Process Task Print Receipt requires a Printer.
- Task Print Receipt requires a Printer.

Without the asterisk post operator in the requirement pattern, only the first string, i.e., "The Process Task Print Receipt requires a Printer." would be computed.

In some cases, each of the computed strings is a grammatically correct sentence, wherein the conditions and/or patterns may ensure that the computed strings are grammatically correct sentences.

In addition or alternatively, the at least one specific pattern may include a plurality of specific patterns. Each of the specific patterns may be applicable to a group of directed graphs defined according to the resource description framework or a group of knowledge graphs defined according to the resource description framework. Each of the default patterns may be applicable to any directed graph defined according to the resource description framework or any knowledge graph defined according to the resource description framework.

Accordingly, each specific pattern may be defined for a single on premises network and a corresponding directed graph, or a group of on premises networks and a corresponding group of directed graphs, whereas default patterns may be applicable to any directed graph.

The patterns may include one or more of the following five patterns:
- a pattern applicable to instance-to-instance statements, including variables <11, p, I2>
- a pattern applicable to instance-to-class statements, including variables <11, p, C1>
- a pattern applicable to class-to-class statements, including variables <C1, p, C2>
- a pattern applicable to instance-to-literal statements, including variables <I1, p, L1>
- a pattern applicable to class-to-literal statements, including variables <C1, p, L1>

The five patterns above may be made applicable to instance-to-instance statements, instance-to-class statements, class-to-class statements, instance-to-literal statements and class-to-literal statements via corresponding conditions including the respective variables <11, p, 12>, <11, p, C1>, <C1, p, C2>, <11, p, L1>, <C1, p, L1>.

The five patterns mentioned above may be default patterns, in the sense that they are applicable to any directed graph, or more specifically, any knowledge graph.

For the five patterns mentioned above, "11" and "12" are variables referring to instances (i.e., instances of classes), "C1" and "C2" are variables referring to classes, "L1" is a variable referring to a literal, and "p" is a variable referring to a predicate. A first one of the five patterns applicable to instance-to-instance statements may be implemented as follows:
The <?I1.rdf:type.rdfs:label> <?I1.rdfs:label> <?p.rdfs:label> the <?I2.rdf:type.rdfs:label> <?I2.rdfs:label> .

A second one of the five patterns applicable to instance-to-class statements may be implemented as follows:
The <?I1.rdf:type.rdfs:label> <?I1.rdfs:label> <?p.rdfs:label> a <?C1.rdfs:label> .

A third one of the five patterns applicable to class-to-class statements may be implemented as follows:
A <?C1.rdfs:label> <?p.rdfs:label> a <?C2.rdfs:label> .

A fourth one of the five patterns applicable to instance-to-literal statements may be implemented as follows:
The <?I1.rdfs:label> <?p.rdfs:label> <?L1>.

A fifth one of the five patterns applicable to class-to-literal statements may be implemented as follows:
A <?C1.rdfs:label> <?p> <?L1>.

A user or administrator may define further default patterns or change the exemplary default patterns provided above.

In addition or alternatively, the plurality of patterns may include at least one text pattern and at least one question pattern. The text pattern and/or the question pattern may be a specific pattern. The text pattern and/or the question pattern may be a default pattern. Each condition may correspond to at least one text pattern and at least one condition may correspond to at least one question pattern. For example, the conditions may be defined such that each condition must correspond to at least one text pattern and each condition may correspond to at least one question pattern. A configuration option may be set to apply question patterns in addition to or instead of text patterns. When one of the conditions matches a respective statement and the configuration option is set to apply question patterns and the question pattern corresponding to the condition can be applied to the respective statement, the method may comprise computing the string from the respective statement using the question pattern and/or computing a further string from the respective statement using the question pattern in addition to a string computed from the respective statement using the text pattern.

For example, the subset of the directed graph may include the following seven statements:
sap:PrintReceipt sap:requires sap:Printer .
sap:PrintReceipt rdf:type sap:Task .
sap:PrintReceipt rdfs:label "Print Receipt" .
sap:Printer rdfs:label "Printer" .
sap:Task rdfs:label "Task"@en .
sap:Task rdfs:label "Process Task"@en .
   sap:Task rdfs:label "Schritt"@de .

Continuing the example, the plurality of patterns may include the following pattern (e.g., text pattern):
The <11.rdf:type.label(lang = `en')*> <11.rdfs:label> requires a <I2.rdfs:label>.

In addition, the plurality of patterns may include the following question pattern preceding the text pattern directly above:
What is required by <11.rdf:type.label(lang = `en')*> <I1.rdfs:label>?

The "*" (asterisk) operator (i.e., post operator) in the question pattern causes a Cartesian product to be computed. In the text and question patterns above, <?I1> is bound to (i.e., holds the value) sap:PrintReceipt, <?p> is bound to sap:requires, and <?I2> is bound to sap:Printer. Accordingly, a configuration option may be set to apply both question patterns and text patterns. Hence, by applying both the question pattern and the text pattern to the seven statements above, the following question/answer strings are computed:
Q: What is required by Task Print Receipt?
A: The Task Print Receipt requires a Printer.
Q: What is required by Task Print Receipt?
A: The Process Task Print Receipt requires a Printer.
Q: What is required by Process Task Print Receipt?
A: The Task Print Receipt requires a Printer.
Q: What is required by Process Task Print Receipt?
A: The Process Task Print Receipt requires a Printer.

The strings above are preceded by "Q: " and "A: " in the interest of clarity. Accordingly, the question patterns may be used to simulate a question-answer interaction. As discussed in the example above regarding to the cartesian product, without the asterisk operator of the present example, strings would only be computed from the first statement to which the question and text patterns can be applied, i.e., the first statement matching the question and text patterns.

In some cases, the subset of the directed graph may be the entire directed graph. Alternatively, the subset of the directed graph may be a proper subset of the entire directed graph and may be determined by means of a query of the directed graph. The query may be a SPARQL Protocol and RDF Query Language (SPARQL) query.

In some cases, the subset of the directed graph includes a plurality of nodes connected by edges. The nodes may represent real-world entities and the edges may represent relations between entities or relations between entities and types (i.e. classes) of the entities. Hence, predicates can be distinguished depending on whether they connect two entities or an entity and an entity type. The entities may also be referred to as resources. For each statement, the subject may correspond to a node, the object may correspond to a (different) node and an edge corresponding to the predicate may connect the subject node to the object node.

The nodes may have corresponding classes, such that each of the nodes has a corresponding class. The (corresponding) classes may be part of (or organized in) a schema (i.e., a data schema or an ontology). The schema may be defined in the RDF or the Web ontology language.

The following are examples of classes:
:State a rdfs:Class .
:EuropeanState a rdfs:Class .
:City a rdfs:Class .

Hence ":State" is a resource that is a class, more specifically, an RDF class. The class ":EuropeanState" is another resource that is a class, more specifically, a subclass of ":State" Hence, hierarchies of classes are possible. Moreover, multiple inheritance is also possible.

In addition or alternatively, the directed graph may be labeled and multi-relational. Accordingly, both the nodes and edges may have labels and the edges may have directions. The objects of the statements may be labels of the directed graph. The directed graph may be multi-relational in the sense that the edges have different labels. The nodes of the directed graph may be subjects or objects and the edges may be predicates.

In addition or alternatively, the schema may include properties. Each of the properties may apply to at least one of the classes of the schema. At least one of the properties may have a domain and/or a range. Each of the properties may be used by (or apply to) at least one statement. The domain (e.g., rdfs:domain) may specify a class to which a subject belongs and the range (e.g., rdfs:range) may specify a class to which an object belongs. More specifically, the domain may specify a class to which the subject of the statement belongs, and the range may specify a class to which an object of the statement belongs. With regard to the RDF Schema, please refer to the W3C RDF Schema specification, https://www.w3.org/TR/rdf-schema/.

The following are examples of properties:
rdf:type a rdf:Property
dbo:foundationPlace a rdf:Property .
:EuropeanState rdfs:subClassOf :State .
:locatedIn a rdf:Property .
:capitalOf a rdf:Property .
:capitalOf rdfs:subPropertyOf :locatedIn .

Hence, ":locatedln" and ":capitalOf" are properties. Moreover, ":capitalOf' is a subproperty of ":locatedIn". Hence, properties can also form hierarchies. The property ":EuropeanState rdfs:subClassOf :State" indicates that ":EuropeanState" is a subclass in a class hierarchy including the class ":State" and the subclass ':EuropeanState".

Hence, the schema may provide a vocabulary for the directed graph (e.g., knowledge graph). The directed graph may have predefined property prefixes, which can indicate whether a node (i.e., a subject or object) is an instance of a class or a class (e.g., a node may be a class if the node has a prefix "dbo," which represents DBpedia ontology, and a node may be an instance if the node has a prefix "dbr," which represents DBpedia resource). In certain cases, the directed graph can use URI design to differentiate between instances and classes. The directed graph may include statements which explicitly indicate certain nodes are classes. In certain cases, whether a specific node represents an instance or a class can depend on the underlying model. For example, whether a node is a class (and included in the schema of the directed graph) or an instance (thus is not included in the schema of the directed graph) can be determined by checking the rdf:type property: If the type is owl:Class, then the node is a class and is included in the schema; otherwise the node is instance (i.e., instance of a class) and is not included in the schema.

In some cases, the total number of patterns is greater than or equal to the total number of properties.

Moreover, for an ontology (i.e., schema) O with a set of classes C and a set of properties P, merely |P| conditions are required to compute strings from a complete directed graph without syntax errors.

In addition or alternatively, the data from the directed graph covers a plurality of topical domains. Each statement may be identified by at least one uniform resource identifier (URI). At least one of the nodes and edges may be identified by a URI or an internationalized resource identifier (IRI). More specifically, the nodes and edges may each be identified by a URI or an IRI. In some cases, one or more of the subject, the object and the predicate may be a URI. Some nodes (e.g., nodes corresponding to objects) may be identified via a literal rather than a URI. The directed graph may be represented using the RDF. The directed graph may be a knowledge base and/or a knowledge graph. The statements may be referred to as facts or fact statements. Accordingly, the directed graph may have a structure that is similar to known knowledge graphs such as DBPedia, Wikidata, BabelNet, DBkWik, Freebase and DBnaray.

Compared to relational databases, the knowledge graph has a more flexible data structure because the types of data provided by the knowledge graph can vary. For example, properties associated with different instances can differ even though these instances share the same class (e.g., "SAP_SE" and "BASF_SE" can have different property data available although they share the same class "Company"). On the other hand, a relational database can be represented in a knowledge graph format, i.e., the knowledge graph can be a higher-level abstraction of the relational database.

In certain examples, the nodes in the directed graph (e.g., knowledge graph) can be organized in a hierarchical structure where a lower-level node (representing a more specific object) may be connected to a higher-level node (representing a more generic object) by one or more edges. The lower-level node (or the lower-level object it represents) can be called a descendant of the higher-level node (or the higher-level object it represents), and the higher-level node (or the higher-level object it represents) can be called an ancestor of the lower-level node (or the lower-level object it represents).

The method may further comprise receiving one or more rules corresponding to the subset of the directed graph. The rules may be reasoning, logic, inference or RDF schema rules. The method may further comprise materializing the subset of the directed graph by applying the rules to the plurality of statements to compute additional statements. Materializing the subset of the directed graph may be described as adding context data or references to context data to the subset of the directed graph.

Materializing the subset of the directed graph may be implemented by applying reasoning or applying the (reasoning) rules to the subset of the directed graph.
Numbered examples of rules are the following:
1. every object of the predicate "dbo:foundationPlace" is a country
2. every subject of the predicate ":capitalOf" is a city
3. every object of the predicate ":capitalOf" is a country

The first rule may be implemented by setting the range of the "dbo:foundationPlace" predicate so that its objects must be instances of a country class. The second rule may be implemented by setting the domain of the ":capitalOf' predicate so that its subjects must be instances of a city class. Similar to the first rule, the third rule may be implemented by setting the range of the ":capitalOf' predicate so that its objects must be instances of a country class.

An example of materializing (i.e., reasoning) follows. The materializing is based on the following statement:
:Madrid :capitalOf :Spain .
and the following properties:
:capitalOf rdfs:domain :City .
:capitalOf rdfs:range :Country
:capitalOf rdfs:subPropertyOf :locatedIn .

Accordingly, materializing may include combining a statement with one or more properties. More specifically, materializing may include combining a statement with properties (e.g., property restrictions) that limit the subject or object of the statement. The combinations may be used to determine further statements, e.g., classes that the subject of the statement is an instance of and/or classes that the object of the statement is an instance of. Materializing may be understood as determining statements that can be implicitly derived from the directed graph and adding the determined statements to the directed graph. Three numbered examples of reasoning follow:
1. :Madrid :capitalOf :Spain .
   :capitalOf rdfs:domain :City .
   → :Madrid a :City .
2. :Madrid :capitalOf :Spain .
   :capitalOf rdfs:range :Country
   → :Spain a :Country .
3. :Madrid :capitalOf :Spain .
   :capitalOf rdfs:subPropertyOf :locatedIn .
   → :Madrid :locatedIn :Spain .

Each of the three examples above combines the statement, ":Madrid :capitalOf :Spain" with a different property in order to compute (i.e., derive) an additional statement. In the first example, the statement ":Madrid :capitalOf :Spain" is combined with the property ":capitalOf rdfs:domain :City" to compute ":Madrid a :City", which indicates that the subject of the statement, ":Madrid", belongs to (i.e., is an instance of) the class ":City". In the second example, ":Madrid :capitalOf :Spain" is combined with the property ":capitalOf rdfs:range :Country" to compute ":Spain a :Country", which indicates that the object of the statement, ":Spain", is an instance of the class ":Country". In the third example, ":Madrid :capitalOf :Spain" is combined with the property ":capitalOf rdfs:subPropertyOf :locatedIn" to compute ":Madrid :locatedIn :Spain", which indicates that the subject ":Madrid" has the property ":locatedIn" with respect to the object ":Spain".

Each of the additional computed statements (i.e., the materialized statements) may be added to the subset of the directed graph before the subset of the directed graph is received and before the strings are computed.

Continuing the example, given the statement and the properties before materialization, the following SPARQL query would return FALSE:
ASK { :Madrid a :City .}

After materialization, the same SPARQL query would return TRUE. Materializing the directed graph may increase the effectiveness of the computed strings in training the language model, in view of the additional reasoning provided and the logical connections created between statements. Moreover, the capability of the language model to reason may increase with the level of detail of the input provided to the language model. Accordingly, since materializing the directed graph increases the level of detail in the directed graph, strings computed from the materialized directed graph may be more effective in training the language model than strings computed from a directed graph that has not been materialized.

The directed graph may be materialized as statements are inserted into the directed graph, e.g., before defining the plurality of conditions and the plurality of patterns. Hence, the steps of receiving the one or more rules corresponding to the subset of the directed graph as well as the following materializing step may be carried out before defining the plurality of conditions and the plurality of patterns. This may lead to faster computing of strings from the subset of the directed graph, since the materializing has already been carried out.

Alternatively, the steps of materializing the directed graph may be carried out upon the subset of the directed graph that is received. This may have the advantage of providing better performance in cases when materialization is not used or may increase the efficiency of creating the directed graph.

In addition or alternatively, the method may further comprise sorting the subset of the directed graph such that nodes are grouped together with their neighbors. The sorting may be carried out after materializing the subset of the directed graph. The sorting may comprise determining a list of nodes in the subset of the directed graph and adding a randomly selected node to a new list of nodes. For each node in the new list of nodes, determining the connected nodes. For each of the connected nodes, if the respective node is in the subset of the directed graph, adding the respective node to the list of nodes. The method may further comprise removing the node from the list of nodes.

Pseudocode for the sorting algorithm described in the preceding paragraph is provided below:

```
      graphNodeSet = graph.getAllNodes()
       backlog = []
      WHILE graphNodeSet NOT EMPTY
      IF backlog IS EMPTY
             // perform a random pick/jump in the graph
             backlog.add(graphNodeSet.randomDraw())
      END IF
      FOR r IN backlog DO
             // cover the full neighborhood of n
             FOR n IN r.connectedTriple DO
                    serialize(r, n.edge, n.node)
                   IF n.node IN graphNodeSet
                          backlog.add(n.node)
                    END IF
             END FOR
             graphNodeSet.remove(r)
      END FOR
```

The serialize() function above may verbalize a respective triple ("r" - subject, "n.edge" - object, "n.node" - predicate). In other words, the serialize() function may translate a statement from the subset of the directed graph into a serialization format, such as RDF/XML, RDFa, Notations (.n3), or Turtle (.ttl), N-Triples, or JSON-LD.

The sorting algorithm may be referred to as a clustering algorithm and may ensure topicality, i.e., that the computed strings are close to each other in the sense that they relate to similar topics or the same topic. In other words, neighboring computed strings are semantically similar. This may increase the effectiveness of the strings in training the language model.

The method may further comprise training the language model using the computed strings.

For example, providing the computed strings as input to the language model may include using the computed strings to train (e.g., further train) the language model. For example, the language model may be pretrained or extensively trained, but the training might not include data in the subset of the knowledge graph. Therefore, training the language model using the computed strings may expand the capability of the language model and enable to language model to assist in tasks related to data in the subset of the knowledge graph.

Training the language model using the subset of the directed graph may have the advantage of leveraging or expanding on the substantial effort and expense that went into the language model. For example, training a large language model, such as ChatGPT, PaLM, Megatron, Titan, or Chinchilla, may take months and cost tens of millions of dollars or euros. Enabling the large language model to apply information from the subset of the directed graph may be a way to take further advantage of the effort and expense already invested in training the large language model.

Moreover, training the language model using the subset of the directed graph may involve fine tuning the language model (e.g., by applying low-rank adaptation) to optimize the language model for a task or a domain, e.g., the domain of the subset of the knowledge graph.

For further information on Low-Rank Adaptation, please refer to "LoRA: Low-Rank Adaptation of Large Language Models", Edward Hu et al., 17 Jun 2021.

In some cases, the language model is a probability distribution over sequences of words. The language model may be a large language model, e.g., having at least one million parameters or at least one billion parameters.

In some cases, the language model includes a neural network. The neural network may be a deep neural network, e.g., a neural network having one or more hidden layers. The neural network may have at least one million parameters (e.g., weights and biases) or at least one billion parameters. The neural network may have been trained on unlabeled (i.e., unannotated) text using unsupervised (i.e., self-supervised) learning.

In addition or alternatively, the neural network may include a transformer that uses self-attention, thereby differentially waiting the significance of each part of input data provided to the neural network. Input to the neural network may be parsed into tokens and the tokens may be processed simultaneously by calculating weights for the tokens in successive layers of the neural network. The neural network may be designed to process sequential input data. The neural network may include weights (e.g., soft weights) that can be changed during runtime.

According to another aspect, a computer program (e.g., a computer program product) is provided. The computer program comprises instructions that, when the program is executed by a computer, cause the computer to carry out the method of any one of the preceding claims.

According to yet another aspect, a computer readable medium stores the computer program. For example, the computer program may be tangibly embodied in the computer readable medium. In other words, the computer readable medium may be a non-transitory storage medium.

According to a further aspect, a computer system for providing data from a directed graph to a language model is provided. The system comprises a database storing a directed graph. The system further comprises a software service configured to define a plurality of conditions and a plurality of patterns. Each of the conditions has at least one corresponding pattern. The software service is further configured to receive a subset of the directed graph from the database. The subset of the directed graph includes a plurality of statements. Each of the statements includes a subject, an object and a predicate relating the subject to the object. For each of the statements in the subset of the directed graph, the software service is configured to perform the following: when one of the conditions matches a respective statement and the pattern corresponding to the condition can be applied to the respective statement, compute a string from the respective statement using the pattern. The software service is further configured to provide the computed strings as input to the language model.

The software service may be a web service. The web service may run on a server and listen for network requests on a port, e.g., port 80.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as a CD-ROM, a DVD-ROM, a semiconductor memory, or a hard disk. In particular, disclosed subject matter may be tangibly embodied in a non-transitory machine (computer) readable medium.

In addition, the subject matter described in the present disclosure can be implemented as a system including a processor, and a memory coupled to the processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description and the drawings.

In the following text, a detailed description of examples will be given with reference to the drawings. Various modifications to the examples may be made. In particular, one or more elements of one example may be combined and used in other examples to form new examples.

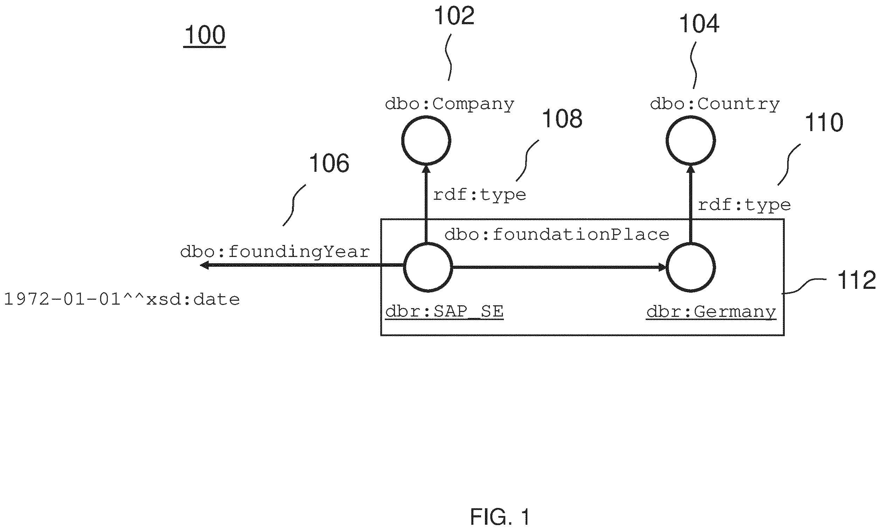

FIG. 1 shows a subset 100 of a directed graph. More specifically, FIG. 1 shows a subset 100 of a knowledge graph. Nodes of the directed graph are shown as circles and edges of the directed graph are shown as arrows. The subset 100 of the directed graph includes labels 102, 104, 106, 108, 110, where the labels are URIs and defined in the resource description framework (RDF). The node labels 102 and 104 are objects, the edge labels 106, 108, 110 are predicates. The string "1972-01-01" may also be a node label (i.e., an object) having a type of xsd:date.

The subset 100 of the directed graph includes a statement 112 (i.e., triple statement) having a subject "dbr:SAP_SE", a predicate "dbo:foundationPlace" and an object "dbr:Germany", each of which are URIs defined in RDF. An exemplary serialization of the statement 112 is dbr:SAP_SE dbo:foundationPlace dbr:Germany. A schema of the directed graph may be defined via RDF schema (RDFS) or Web Ontology Language (OWL) from the World Wide Web Consortium (W3C).

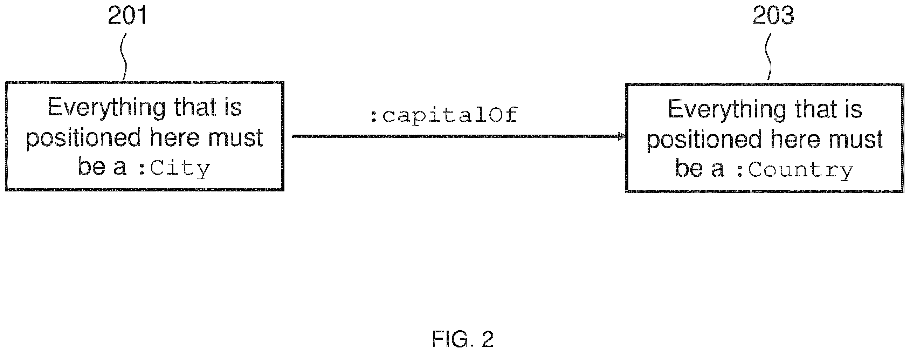

FIG. 2 shows a domain 201 and a range 203 of a property, ":capitalOf'. The domain 201 and the range 203 may be defined as follows:
:capitalOf rdfs:domain :City .
:capitalOf rdfs:range :Country .

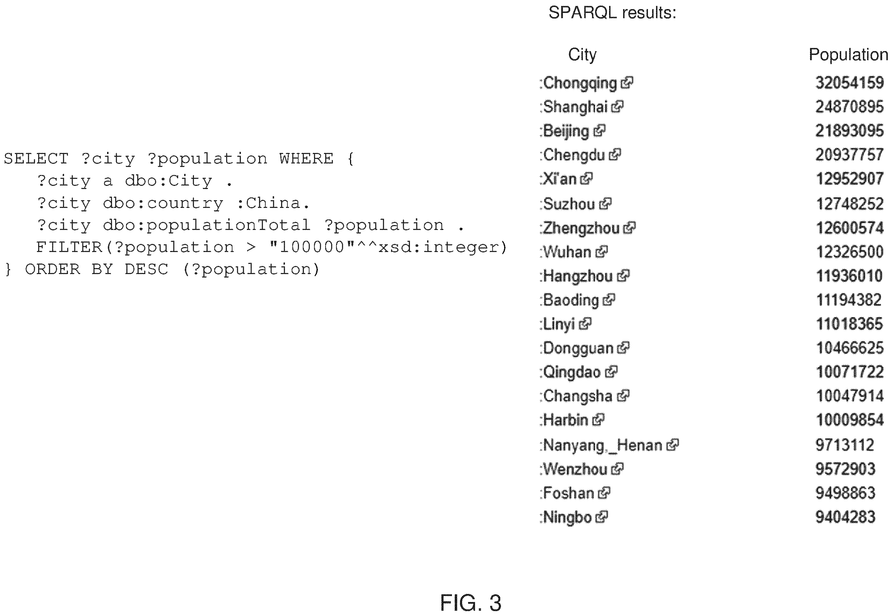

FIG. 3 shows an exemplary SPARQL query 301 of a knowledge graph. The query 301 is configured to determine an answer to the following question: what is the population of cities in China which have more than 100,000 inhabitants? The results of executing the query 301 are also shown.

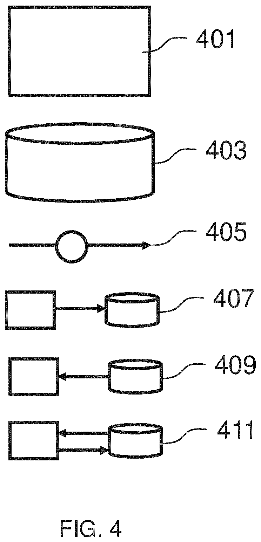

FIG. 4 shows a block diagram notation used in subsequent figures. A system component 401 is shown as a rectangle. System components may also be shown as ovals. Storage 403 is shown as a cylinder with an oval profile. A request between system components 405 is shown as an arrow including a circle. A write between a system component and storage is shown at 407. A read between system component and storage is shown at 409. Read and write between system component and storage is shown at 411.

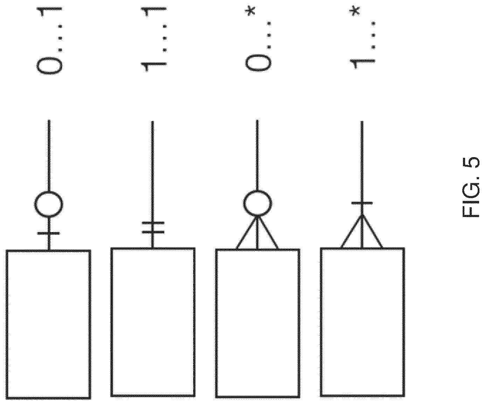

FIG. 5 shows Crow's Foot Notation for annotating entities and cardinalities (e.g., minimum and maximum multiplicity).

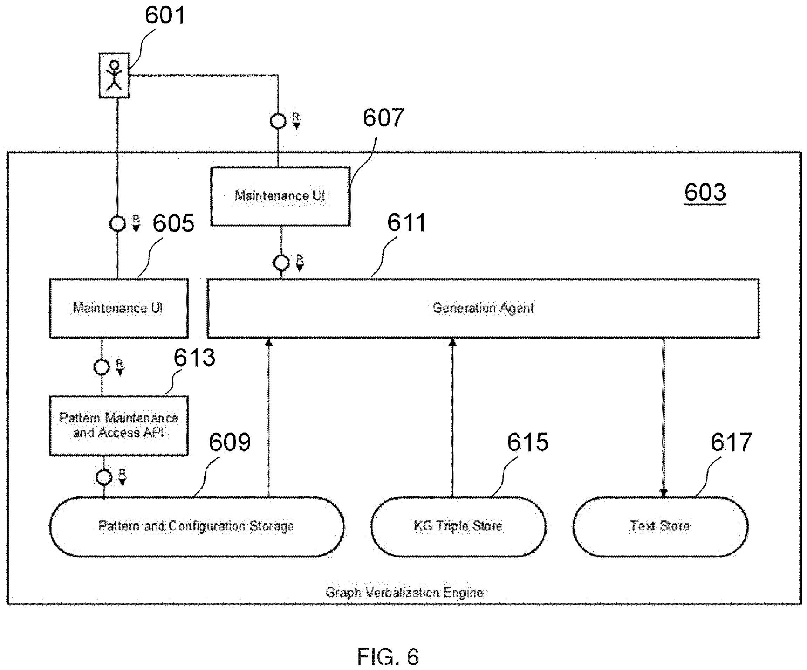

FIG. 6 shows an architecture for a system for providing data from a directed graph to a language model. The language model may be trained using the data from the directed graph. Departing from the notation of FIG. 4, user interfaces and software components are shown as rectangles and storage components are shown with rounded corners.

The system may take the subset 100 of the directed graph (or a reference to the subset 100), custom conditions and custom patterns, and configuration options as input. The subset 100 may be provided as a set of triple statements. The pattern and configuration storage 609 may store default patterns, while custom conditions and patterns are provided by the client 601.

The configuration options may include indicating whether question patterns should be used in addition to text patterns or exclusively. The configuration options may specify how multiple patterns corresponding to conditions will be handled:
RUN_ALL: all patterns assigned to a condition are applied if the condition is TRUE;
RUN_RANDOM: patterns are ordered randomly and a first pattern that can be applied to the statement is used.

Another configuration option may specify whether the directed graph should be materialized (default TRUE). Other ways of handling multiple patterns and other configuration options may also be used.

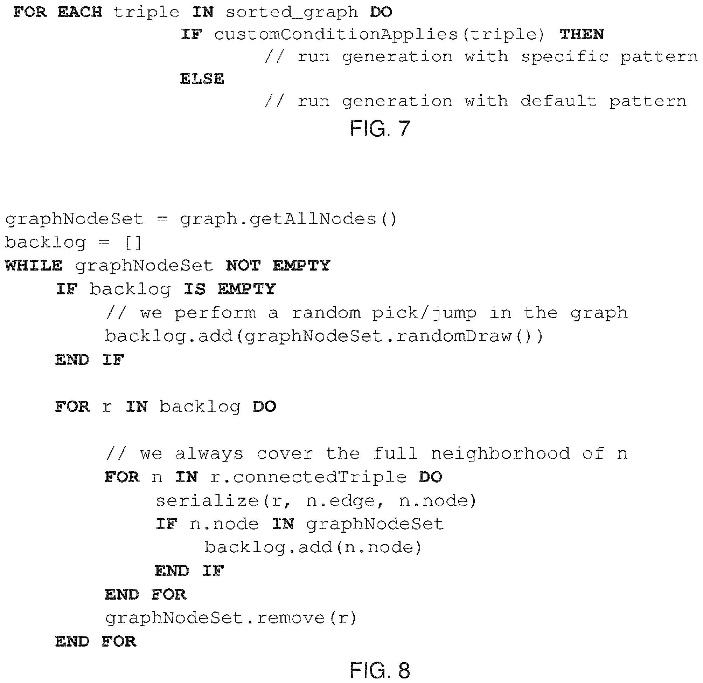

The directed graph may be materialized, and the statements of the directed graph may be sorted, e.g., by the generation agent 611. Subsequently, strings may be computed from the statements of the subset 100 of the directed graph, as discussed in connection with FIG. 7.

A client 601 may be used to interact with a software service 603. The client 601 may interact with the software service 603 via different user interfaces (UIs) 605 and 607 in order to maintain patterns and/or configurations in a pattern and configuration storage 609, or to compute strings from the subset 100 of the directed graph via a generation agent 611. The pattern and configuration storage may be accessible via a pattern maintenance and access application programming interface (API) 613. The subset 100 may be the entire directed graph or a proper subset of the directed graph identified via a query, e.g., a SPARQL query. The SPARQL query may be constructed via a user interface that abstracts the query language, e.g., a low-code or no-code platform.

The directed graph may be stored in storage 615 and strings computed from statements of the subset 100 of the directed graph may be stored in storage 617.

FIG. 7 shows an algorithm for computing strings from statements (i.e. triples) in the subset 100 of the directed graph. In the depicted example, the directed graph is sorted before the strings are computed. Before computing (i.e. generating) a string from a default pattern, it is first determined whether a condition corresponding to a specific (i.e., custom) pattern matches the statement. If the condition corresponding to the specific pattern matches the statement, the specific pattern is used to compute the string. Otherwise, the default pattern is used to compute the string.

When there are multiple specific and default patterns, then the specific patterns may be checked first and one of the default patterns may be used to compute the string only if none of the specific patterns can be applied.

After the strings are computed, the strings may be reformulated using a reformulation language model. The reformulation language model may differ from the language model to be trained. The reformulation language model may be a language model having a high or very high precision for f in the following reformulation function f:
f(sentence) = sentence'

The reformulation language model (also referred to as a paraphrasing language model or an encoder-decoder model) may be implemented using Google T5, FLAN-T5, or Quillbot. The reformulation language model may have a high precision (e.g., at least 90% correctness) or a very high precision (e.g., at least 99% or at least 99.9% correctness). The reformulated strings may have a greater degree of language variation than the originally computed strings. The reformulated strings may be provided to a user and may hold the attention of the user better than the originally computed strings. Alternatively, the reformulated strings may be provided to the language model to be trained. The language variation in the reformulated strings may produce better results when training the language model than the originally computed strings.

The reformulated strings may occasionally be incorrect. Accordingly, a human may have the option to accept or reject the reformulated strings. Accepted and/or rejected reformulated strings may be used to retrain the reformulation language model. In addition, the accepted and/or rejected reformulated strings can be used to compare the quality of different reformulation functions f.

FIG. 8 shows an exemplary sorting algorithm for sorting the statements of the directed graph. Sorting may prevent output of computed strings in random order. Once the statements are sorted, the same or similar topics may be grouped together. The sorting algorithm may have the following form:
List<Triple> result = sort(Set<Triple>)

Set<Triple> corresponds to the statements of the directed graph before sorting and List<Triple> result corresponds to the statements of the directed graph after sorting, "sort" calls a sorting function, such as a function implementing the exemplary sorting algorithm depicted in FIG. 8. Other sorting functions may also be used.

The graphNodeSet variable initially holds the unsorted statements of the directed graph and the backlog variable will contain the sorted directed graph upon completion of the sorting algorithm.

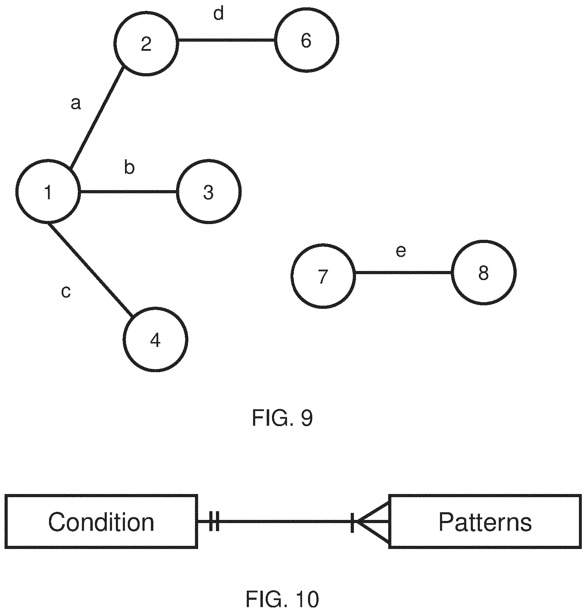

FIG. 9 shows a directed graph that may be provided as input to the sorting algorithm of FIG. 8. Assuming that node one was drawn first, the output would be the following statements:
1 a2
1 b3
1 c4
2d6
7e8

Each number above represents a node, and each letter represents an edge, as shown in FIG. 9. Accordingly, the sorting algorithm ensures that rather than a random output, nodes that are close together in the directed graph are also grouped together in the computed strings provided as output. In other words, after being computed, neighboring strings cover semantically similar content.

FIG. 10 uses the Crow's Foot Notation of FIG. 5 to show that one condition has at least one but may have multiple corresponding patterns (also referred to as text patterns). When provided with a statement, e.g., an RDF triple, a condition may evaluate to TRUE or FALSE. If the condition evaluates to TRUE, i.e., the condition matches a respective statement, it is determined whether the at least one pattern corresponding to the condition can be applied to the respective statement. If the pattern can be applied, a string is computed from the respective statement using the pattern.

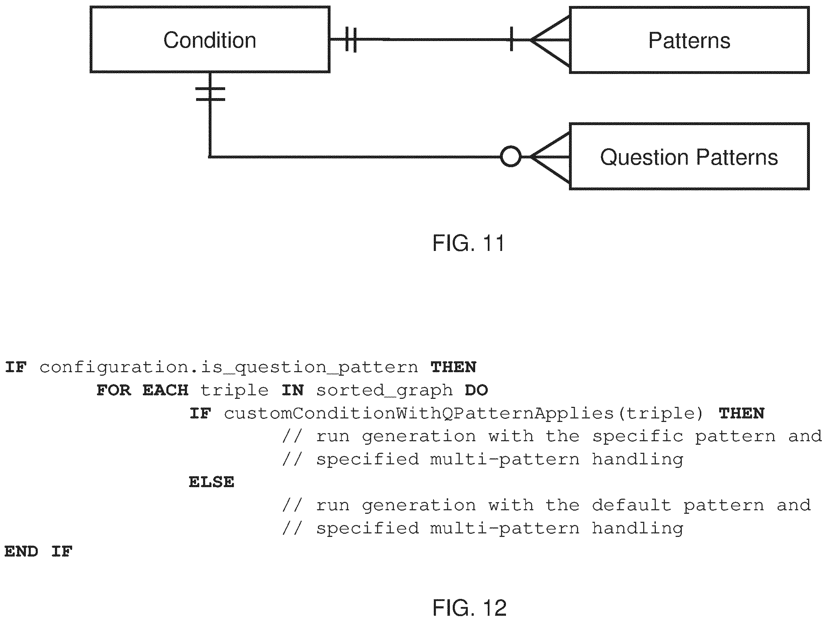

FIG. 11 extends FIG. 10 to cover question patterns in addition to text patterns. Accordingly, the Crow's Foot Notation of FIG. 5 is used to show that one condition has at least one but may have multiple corresponding text patterns. In addition, the condition may have zero or more question patterns. The syntax of question patterns may be identical to the syntax of text patterns.

Question patterns may enable conversation-like strings to be computed. Such conversation like strings may be particularly useful for some language models, e.g., language models that require conversations.

FIG. 12 extends the algorithm of FIG. 7 to cover question patterns. In particular, if a configuration option enabling use of question patterns is set then specific conditions corresponding to question patterns are checked. If a question pattern corresponding to a specific condition can be applied, then a string is computed from a respective statement using the question pattern. Otherwise, a default pattern is used to compute a string from the respective statement.

The configuration options specifying how multiple patterns corresponding to conditions will be handled may be extended to question patterns as follows. Specifically, the following three configuration options may be used to handle multiple patterns assigned to at least one condition:
RUN_ALL: If a condition matches a statement and multiple question patterns are assigned to the condition, all question patterns that can be executed are executed. If there are multiple text patterns and question patterns, the Cartesian product of the text patterns and question patterns is executed.
RUN_RANDOM: If a condition matches a statement, a random order of all available question patterns assigned to the condition is determined. The question patterns are then tested for execution in a top-down fashion. The first question pattern that can be executed is executed and the process is stopped.
RUN_ALL_QPATTERNS_RANDOM_TEXT_PATTERN: All question patterns are used but if there are multiple text patterns, only a random text pattern is used to generate the answer.

Other ways of handling multiple patterns assigned to a condition may also be used.

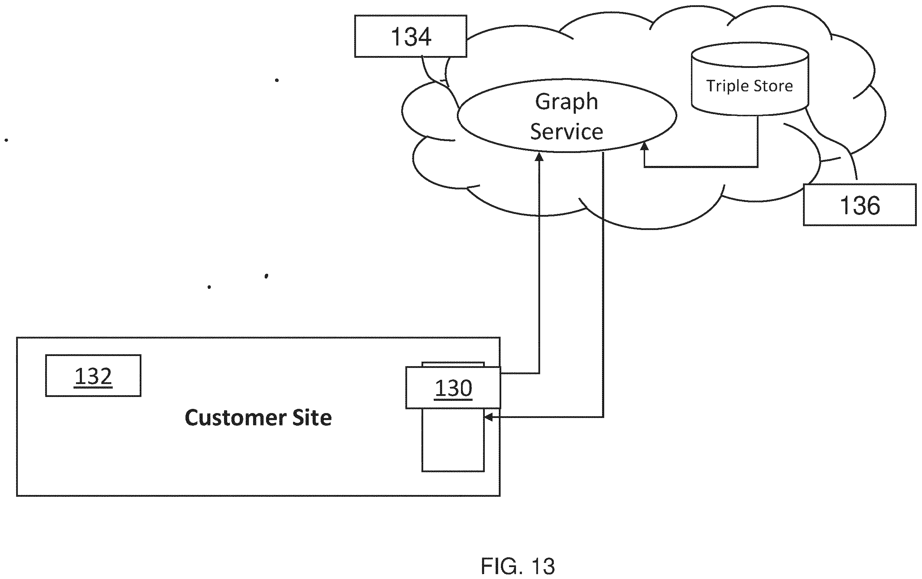

FIG. 13 shows a remote service configuration and remote storage (i.e., a cloud implementation) of the method for providing data from a directed graph to a language model. A web client 130 connected to a local area network on the premises 132 of an organization may connect to a remote service, i.e., graph service 134, via the Internet. The local area network may use ethernet and/or Wi-Fi to provide network communications. The local area network may be contrasted with a wide area network. The graph service 134 may use storage 136 to carry out steps of the method for providing data from a directed graph to a language model. The web client 130 may initiate the method for providing data from the directed graph to a language model via a method call to the graph service 134. In response to the method call, the graph service 134 may connect to the storage 136 and receive the subset 100 of the directed graph.

The graph service 134 may then apply patterns to respective statements of the subset 100 of the directed graph based on whether conditions corresponding to the patterns match the respective statements and the patterns can be applied to the respective statements. If the patterns can be applied, strings are computed from the respective statements using the patterns. The graph service 134 may provide the computed strings to the web client 130 after all the statements in the subset 100 of the directed graph have been processed.

The graph service 134 and the storage 136 may be part of a cloud computing environment. Cloud computing is a model of service delivery for enabling convenient, on-demand network access to a shared pool of configurable computing resources (e.g., networks, network bandwidth, servers, processing, memory, storage, applications, virtual machines, and services) that can be rapidly provisioned and released with minimal management effort or interaction with a provider of the service.

A cloud computing environment (i.e., cloud environment or cloud) may have one or more of the following characteristics: scalability, multitenancy, performance monitoring, virtual resources that are dynamically assignable to different users according to demand, multiple redundant sites, multiple virtual machines, as well as network accessibility (e.g., via. the Internet) from multiple locations (e.g., via a web browser) and devices (e.g., mobile device or PC).

In comparison to an on-premises computing environment, the cloud computing environment may have a higher ratio of virtual resources to physical resources (e.g., a higher ratio of virtual machines to physical machines). For example, the ratio of virtual resources (e.g., machines) to physical resources may be at least 10:1, at least 20:1 or at least 30:1 in the cloud computing environment. In contrast, an on-premises computing environment may have less than four virtual resources (e.g., machines) per physical resource.

The cloud environment may be a public cloud or a private cloud. Public cloud (computing) infrastructure may involve sharing hardware, storage and/or network resources among multiple organizations or tenants. Services and may be accessed and managed using a web browser. Private cloud (computing) infrastructure may include resources exclusively used by one organization or group of users. In comparison to public cloud computing infrastructure, private cloud infrastructure may provide more flexibility and control, however, private cloud infrastructure may be more expensive. In both cases, public and private cloud computing infrastructure may be hosted by a service provider, e.g., Microsoft (Azure), Amazon (AWS) or SAP Business Technology Platform.

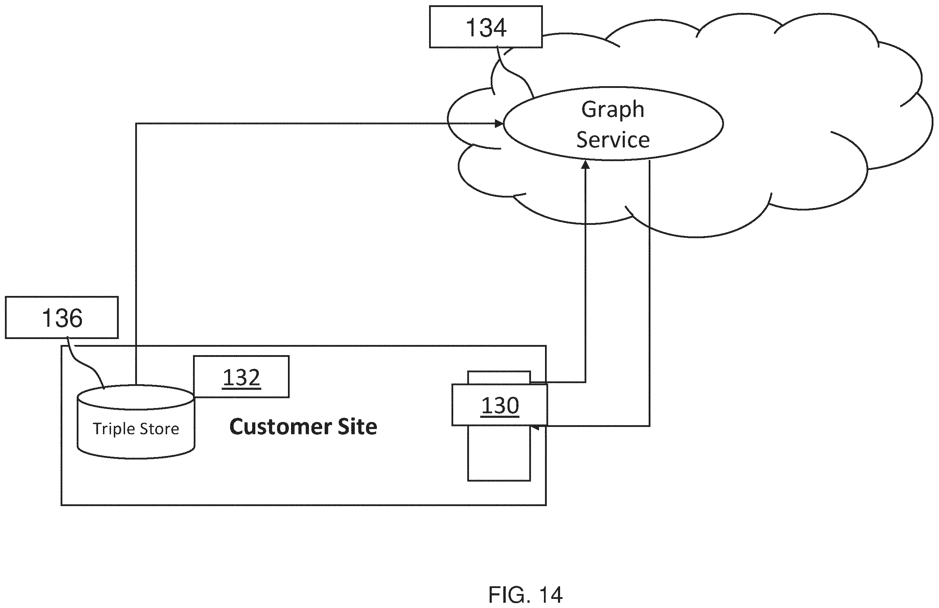

FIG. 14 shows a hybrid implementation of the method for providing data from a directed graph to a language model. Accordingly, the web client 130 still accesses the graph service 134 over the Internet. However, the storage 136 is located on premises 132 of the organization. For example, the storage 136 may be connected to the web client 130 via the local area network. Alternatively, the web client 130 and the storage 136 may be connected to different local area networks. The graph service 134 may operate as described with regard to FIG. 13.

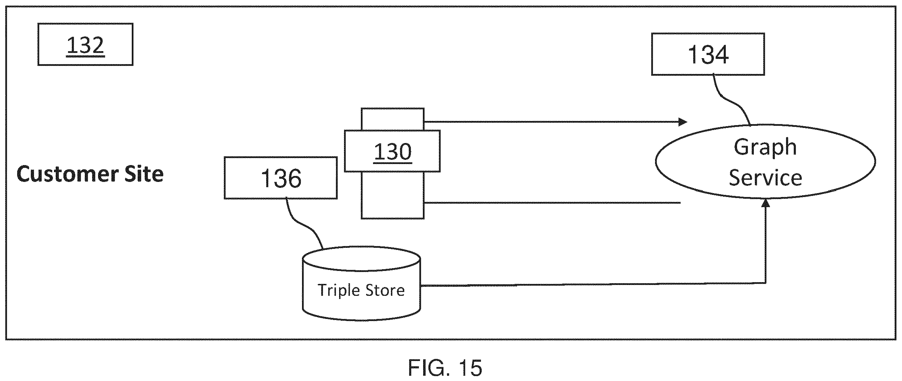

FIG. 15 shows an on premises configuration in which the web client 130, the graph service 134, and the storage 136 are located on premises of the organization 132. In this case, the web client 132, the graph service 134 and the storage 136 may be connected to the same local area network. Other network configurations are also possible. The graph service 134 may operate as described with regard to FIG. 13.

### Example 3- Example Supplementation of User Input to Large Language Models

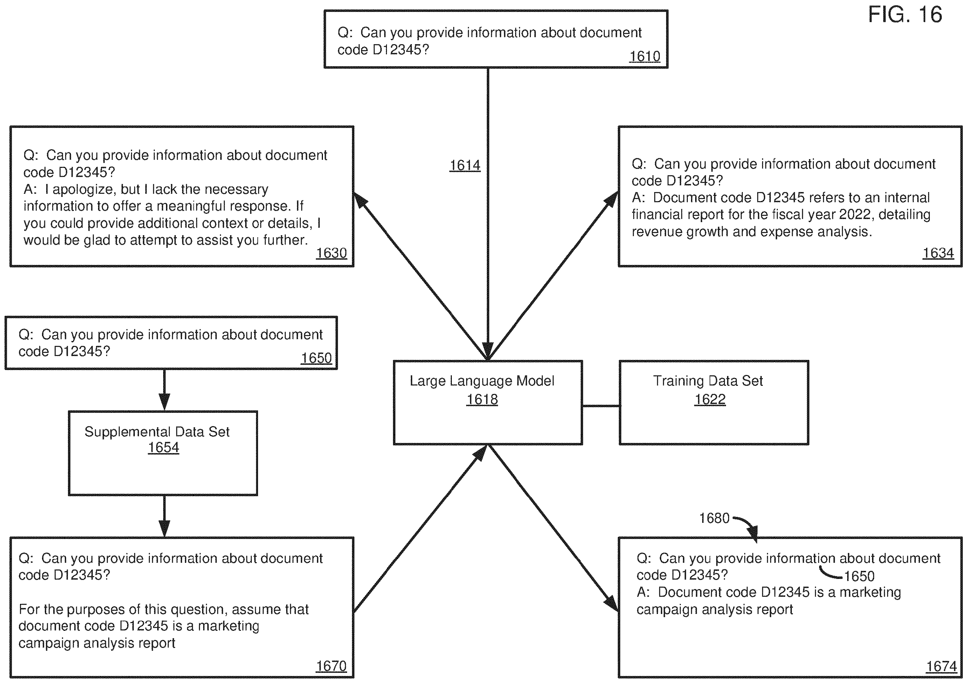

FIG. 16 provides an illustration of how disclosed techniques can be used to influence a response of a large language model, including by providing information that is not known to the large language model or constraining the large language model to use particular information identified from another data source from user input, regardless of whether that information may have been generally used in a training corpus for the large language model.

Consider user input 1610, in the form of a question about the meaning of a particular document code used by a particular company. At 1614, the user input 1610 is submitted to a large language model 1618 trained on a training data set (which can also be referred to as a training corpus) 1622. Assume further that the information needed to response to the user input 1610 is not part of the training data set 1622, such as because the information needed for the response is located in documents internal to the company that are not available for use in the training data set.

In many typical scenarios, the large language model 1618 may either indicate that it cannot answer the question, or it might try to answer a question, but provide "made up"/inaccurate information in the response, which can be referred to as hallucinating. In particular, response 1630 illustrates a scenario where the large language model 1618 realizes it does not have sufficient information to answer the question of the user input 1610.

Response 1634 illustrates a scenario where the large language model 1618 does not realize that it does not have sufficient information to answer a question. For example, assume that the document code, D12345, provided in the user input 1610 refers to a marketing campaign analysis. The large language model 1618 may use "creative filling" or other processes to incorrectly indicate that the document code is an internal financial report. In some cases, this may be a "reasonable" conclusion for the large language model 1618 based on other information in the training data set 1622, even though it is factually incorrect.

FIG. 16 illustrates how disclosed techniques can be used to supplement or emphasize data available to the large language model 1618 so that the large language model can formulate an accurate and helpful response. In particular, consider another instance of the user input 1610, indicated as user input 1650. Rather than being directly submitted to the large language model 1618, the user input 1650 is first analyzed and used to identify additional information to be included in a modified version of the user input based on information in a supplemental data set 1654.

In this particular example, the supplemental data set 1654 can represent a data source internal to the specific company. While the large language model 1618 could also be private to the company, the large language model could be a publicly available large language model, or a version of a publicly available large language model specifically for use by the company. Private versions of publicly available large language models can be useful for reasons such as maintaining confidentiality of information in the user input 1610, information of the supplemental data set 1654, and information in responses to the user input. In some cases, the training data set 1622 can also have different information than a publicly available version of the large language model 1610, or of other "private" versions of the publicly available large language model.

The supplemental data set 1654 can be maintained in various formats, and various techniques can be used to search the supplemental data set and provide information from the supplement data set to be used with the user input 1650. A particular example that will be further described is the use of a named entity recognition service to identify entities in the user input 1650, where those entities are then used to search for supplemental information in a knowledge graph, such as a knowledge graph using the Resource Description Framework (RDF). As will be further described, the RDF format expresses relationships in the knowledge graph in the form of triples, representing a combination of a subject, an object, and a predicate. Searching for relevant information can also use an ontology, such as an ontology representing in the Web Ontology Language (OWL). The ontology can be used to identify relationships between different entities, as well as relationships between relationship (predicate) types.

Information from the supplemental data set 1654 can be added to the user input 1650 to provide modified user input 1670. In some cases, information from the supplemental data set 1654 can be processed or formatted prior to being added to the user input 1650. For example, rather than providing "raw" triples for results from the knowledge graph, the triples can be "verbalized," such as using the techniques described in Example 2.

The modified user input 1670 is then provided to the large language model 1610, to provide a response 1674. The response 1674 is based at least in part on the supplemental information in the modified user input 1670. The response 1674 can optionally include/be based on information in the training data set 1622. For example, the response 1674 can include facts or explanation derived at least in part from the training data set 1622.

However, even if any factual or explanatory information in the response 1674 is described solely from the supplemental information in the modified user input 1670, the use of the large language model 1618 is still beneficial, such as because the training data set 1622 provides information useable in processing and responding to the modified using input, such as based on an "understanding" of grammar, which helps the large language model 1618 "understand" the modified user input 1670 and provide the response 1674 in a readily understandable, grammatically correct format.

Note that the conversation represented in the panel 1680 contains the original user input 1650, rather than the modified user input 1670, in addition to the response 1674. The conversation does not contain any information from the supplemental data set 1654 other than to the extent to which such supplemental information was incorporated into the response 1674 using the large language model 1610. Thus, the process of identifying supplemental information using the user input 1650, producing the modified user input 1670, and submitting the modified user input to the large language model 1618 is "invisible" to the user. From the user's perspective, it is as if they simply received the response 1674 from the large language model 1618 based on their original user input 1650.

### Example 4- Example Process of Supplementing User Input with Verbalized Knowledge Graph Triples

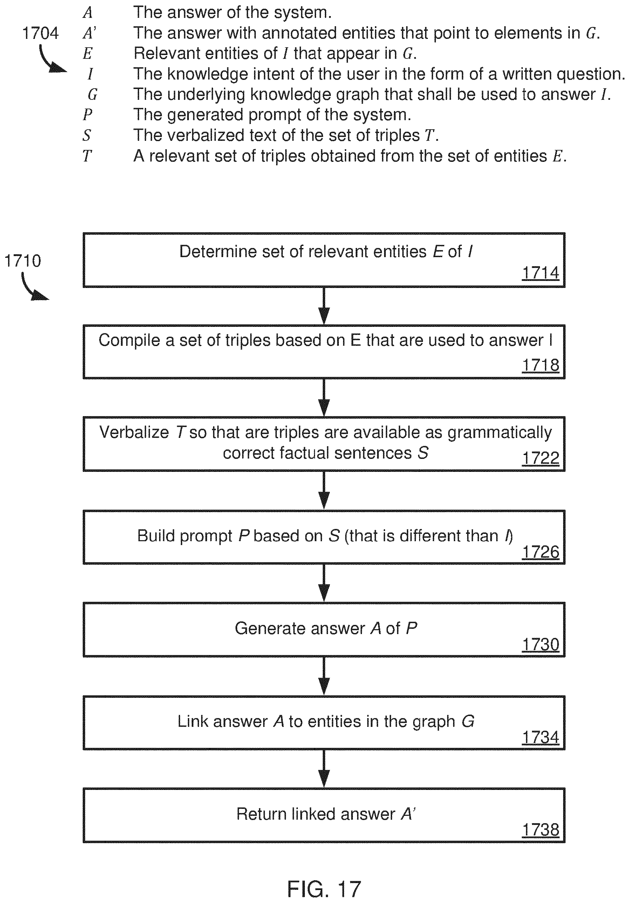

FIG. 17 provides a more formal explanation of the scenario described with respect to FIG. 16. The explanation is provided in a flowchart of a process 1710 for providing an answer to a question posed by a user in a prompt to a large language model. The description of the processes uses a notation 1704.

At 1714, a set of entities E relevant to particular user input *I* is determined. For example, the set of entities E can be determined by submitting the user input *I* to a named entity recognition service. A Named Entity Recognition (NER) service is a natural language processing technology that identifies and classifies specific entities, such as names of people, locations, organizations, dates, and more, within a given text. NER services use machine learning and linguistic patterns to extract these entities and categorize them into predefined categories. Examples of NER services include spaCy, Stanford NER, OpenNLP, and Google Cloud Natural Language API. A data source, such as a semantic framework (for example, a knowledge graph), can then be searched using the identified entities, optionally using a particular ontology.

A set of triples (such as in subject, object, predicate format) are compiled at 1718 based on the identified entities E that are used to answer *I*, based on the results of searching a dataset, such as a knowledge graph. The triples are verbalized at 1722, such as using the technique described in Example 2. Verbalized representations of the triples can be more useable for a large language model in providing one or more grammatically correct factual sentences *S.*

At 1726, a prompt *P* is built using the set of grammatically correct factual sentences *S*. For example, the sentences *S* can be appended to the original user input *I* to provide the prompt *P.* As will be further described, additional instructions can be added to the prompt *P,* such as instructions that influence how the large language model answers, such as providing a brief response or a verbose response.

An answer *A* of the prompt *P* is generated at 1730, such as by submitting the prompt *P* to a large language model. Optionally, the answer *A* can be processed to link words or phrases in the answer to relevant entities is a knowledge graph *G* (which can be the same knowledge graph that was used at 1718, or a different semantic graph (or, more generally, one or more semantic frameworks can be used to determine the entities *E* in the user input *I*, and one or more semantic frameworks can be used to determine entities in the answer *A,* where all or a portion of the semantic frameworks can be different for these two use scenarios) at 1734. The linking can similarly be accomplished using a named entity recognition service in a similar manner as described at 1714. An answer *A'* is provided to a user in response to the input *I* at 1738. For example, the answer A' can be displayed, or can be sent to a component for display to a user. The answer A' can be the answer *A* in the event that the linking operation did not occur, or if no entities were found to be linked or linking criteria was not satisfied.

### Example 5- Example Construction of Modified User Input, Large Language Model Response, and Linking of Entities in Large Language Model Response to Supplemental Information

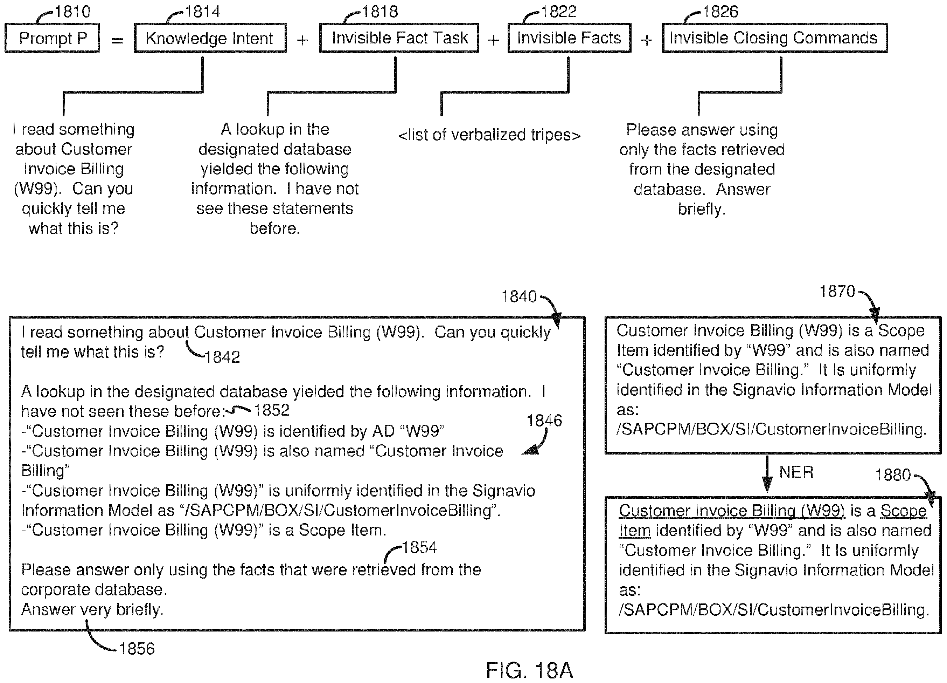

FIG. 18A provides an example of certain aspects of the process 1700 of FIG. 17. In particular, FIG. 18A illustrates how a prompt 1810, corresponding to modified user input, can be produced. As shown, the prompt 1810 is composed of knowledge intent 1814, which can correspond to initially provided user input (identifying what knowledge the user intends to gain through the submission of the input to a large language model), designated as *I* in the notation 1704 of FIG. 17. The prompt 1810 also includes an invisible fact task 1818. The fact task corresponds to the results of searching a knowledge graph for entities identified in processing of the knowledge intent 1814 using a named entity recognition service. In a particular example, the results of the invisible fact task 1818 are a set of ordered triples, such as in the subject, object, predicate format.

The triples of the invisible fact task 1818 are processed to provide a set (or list) of verbalized triples (such as using the technique of Example 2), which serve as invisible facts 1822 that form part of the prompt 1810. Optionally, the prompt 1810 can include invisible commands, such as closing commands 1826. In particular, the closing commands 1826 can be used to restrict what data is used by a large language model in generating an answer to the prompt 1810, or providing input to guide how the result should be generated or presented.

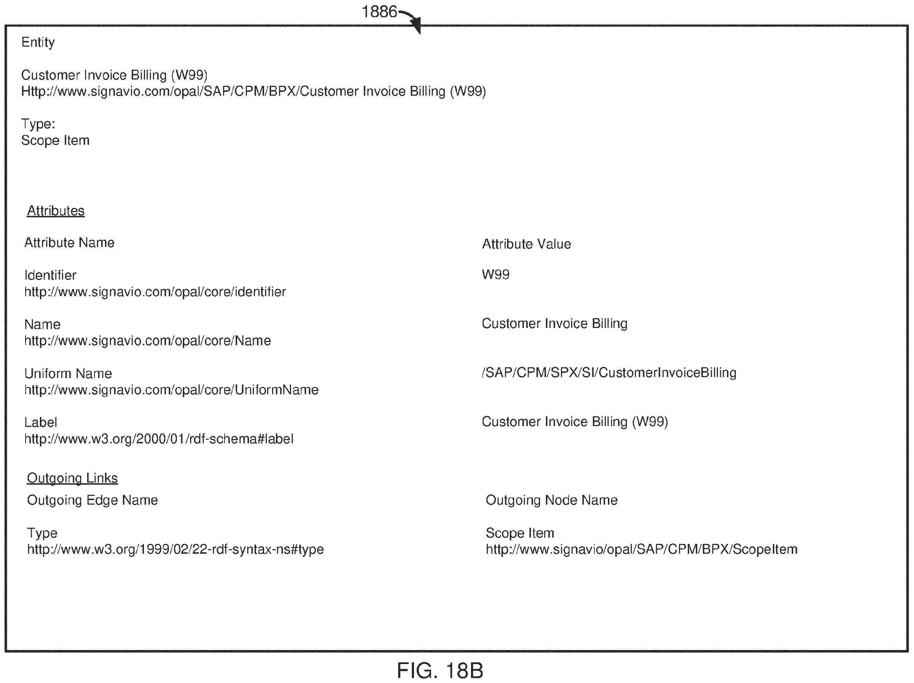

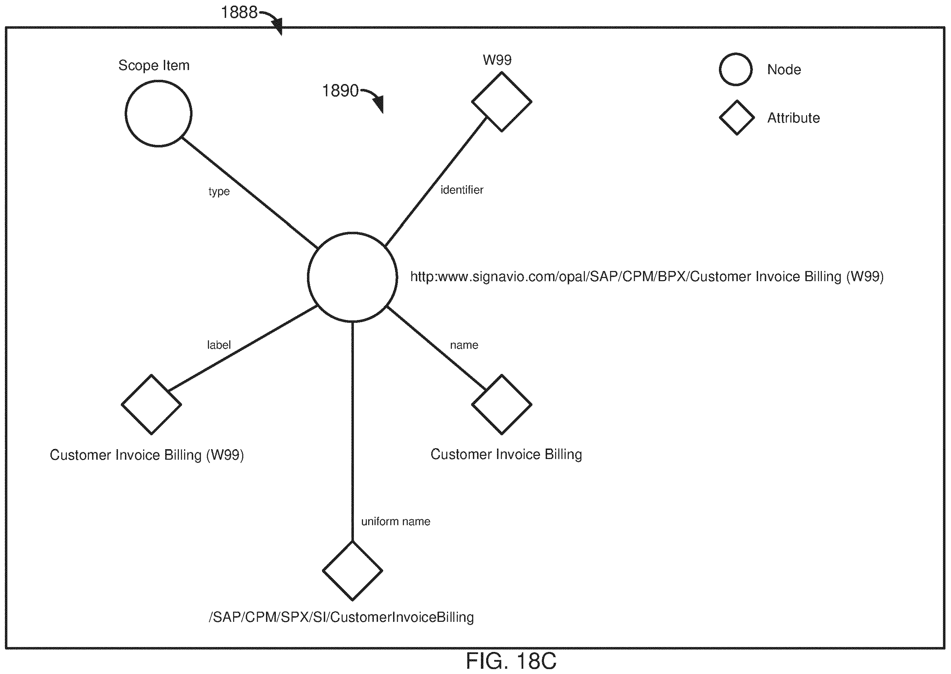

FIG. 18 provides particular examples of the prompt 1810 and its components 1814, 1818, 1822, 1826. In particular, a panel 1840 provides example knowledge intent 1842. The panel 1840 includes a specific set of invisible facts 1846 that were generated from triples identified in an invisible fact task for the knowledge intent 1842. Generating the set of invisible facts 1846 can involve identifying entities in the knowledge intent 1842 using a named entity recognition service. Example pseudocode for performing this operation can be:
METHOD NER(String knowledgeIntent) RETURNS List<URI> In this case, the value of knowledgeIntent would be the knowledge intent 1842, and List would hold the URI (unique resource identifier) of the identified entity "Customer Invoice Billing (W99)." The URI can correspond to an identifier for a node of a knowledge graph corresponding to "Customer Invoice Billing (W99)." As a particular example, assume that the call of METHOD NER for the illustrated example provides the result:
http://www.signavio.com/opal/SAP/CPM/BPX/Customer Invoice Billing (W99)

The above URI can then be used in a query of a knowledge graph to retrieve relevant triples. In particular, the query can be a SPARQL query of a knowledge graph expressed in RDF. Note, various configuration information or constraints can be provided for the query. For example, in many cases, large language models are able to accept a limited number of tokens in a single input prompt. Thus, the results of the knowledge graph can be subject to a threshold, where results exceeding the threshold are not provided in the prompt 1810, or various criteria are used to select particular results of the results to include in the prompt up to the threshold, such as by weighting particular entities or selection mechanisms.

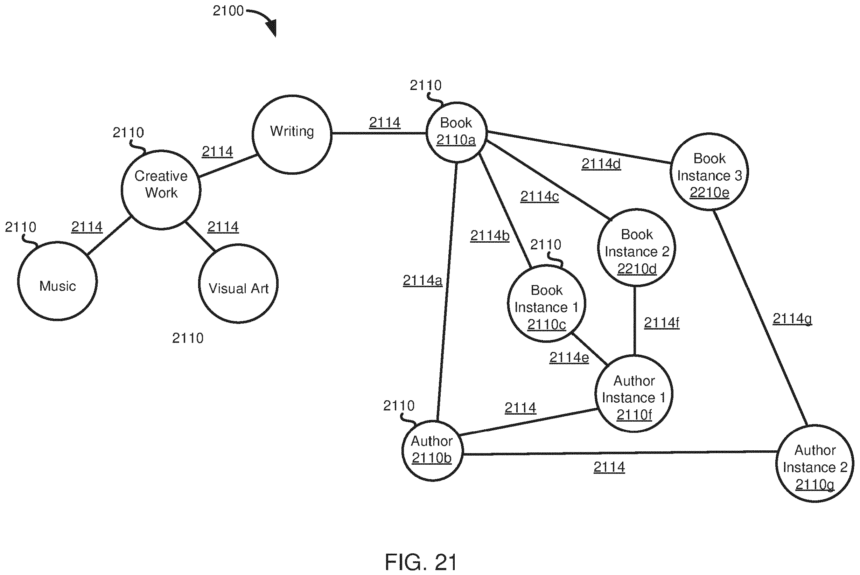

One or more indirection parameters can also be defined for the query. For example, an ontology can be used to relate various entities or entity relationships in the knowledge graph. The ontology can be set to use no indirections or a specified level of indirections. Similarly, rather than retrieving only the information for a specific URI from the knowledge graph, a number of "hops" can be specified. These configurations may be dynamic. For example, an initial number of results can be analyzed. If the number of results is less than a threshold, the levels of indirection of one or both of the ontology or the knowledge graph can be increased. An example knowledge graph and the use of hops is further described with respect to FIG. 21.

The search process can be subject to other types of constraints or configurations. For example, parts of a knowledge graph may be prioritized for searching based on metadata associated with the user, such as the user's job function or projects the user is currently assigned to. The knowledge graph may also be subject to authorization requirements, and in at least some cases triples in portions of a knowledge graph to which a user does not have appropriate access rights can be excluded from search results.

In addition to the original knowledge intent 1842 and the invisible facts 1846, the window 1840 representing a prompt P created from an original prompt including the original knowledge intent, can include instructions 1852, 1854, 1856. In general, instructions can be used to influence how a large language model responds to the modified prompt, as well as potentially influencing later interactions with user. General types of instructions that can be provided include contextual instructions, content constraint instructions, formatting instructions, source emulation instructions, creative instructions, question clarification instructions, explanation instructions, contrast instructions, synonym/paraphrasing instructions, or humor instructions.

For example, the instructions 1852 instruct the large language model to treat the invisible facts 1846 as new information. The instruction 1852 can be useful so that the large language model does not provide a response such as "as you just told me" or "as you previously told me." That is, in at least some embodiments, information injected into a modified prompt is intended to be invisible to an end user. That is, from the user's perspective, the large language model is responding to the user's original prompt, not the modified prompt. In other cases, the modified prompt is not hidden from the user.

Instruction 1854 directs the large language model to generate an answer only from the invisible facts 1846, as opposed to information that might be produced based on its training materials. Instruction 1856 directs the large language model to provide a brief response. Instruction 1856 can further constrain the large language model to the invisible facts 1846, which can reduce the chance of the model "hallucinating." Other instructions can be used to prevent attempts by users to have a large language model say negative things about a particular company, such as the company whose semantic framework is being used to supplement the original user input/prompt.

Panel 1870 represents an initial response provided by large language model to the modified prompt of the panel 1840. It can be seen that the response was generated solely from the invisible facts 1846, which are described in a readily understandable form based on the large language model's knowledge of grammar, semantics, contextual understanding, natural language generation, and transfer learning.

Optionally, the initial response can be further processed. For example, the initial response can be processed by a named entity recognition service to identify entities represented in a knowledge graph. The initial response can then be modified so that aspects of the response are linked to information in the knowledge graph for such entities, such as shown in panel 1880. In particular, "Customer Invoice Billing (W99)" and "Scope Item" are both underlined in the panel 1880. By selecting those phrases, a user may be provided with additional information, such as information retrieved from a knowledge graph based on the entity associated with the respective phrases.

FIGS. 18B and 18C provide example user interface screens 1886, 1888 that can be displayed if a user selects "Customer Invoice Billing (W99)" in the panel 1880. In particular, the user interface screen 1886 of FIG. 18B provides a textual summary of the relevant entity, including attributes of the entity. The user interface screen 1888 provides a visual representation 1890 of the immediate portion of a knowledge graph surrounding the node for the "Customer Invoice Billing (W99)" entity.

Note that information linked to a particular entity in a response can be to a knowledge graph or to information other than information in a knowledge graph. For example, a mapping between a particular entity in the knowledge graph and particular information to be linked to the entity can be provided. In other cases, specific information to be provided for an entity via a link in a response of a large language model can be defined in the knowledge graph. For example, an attribute for the entity can be defined, where the attribute specifies a URI to be used with a link.

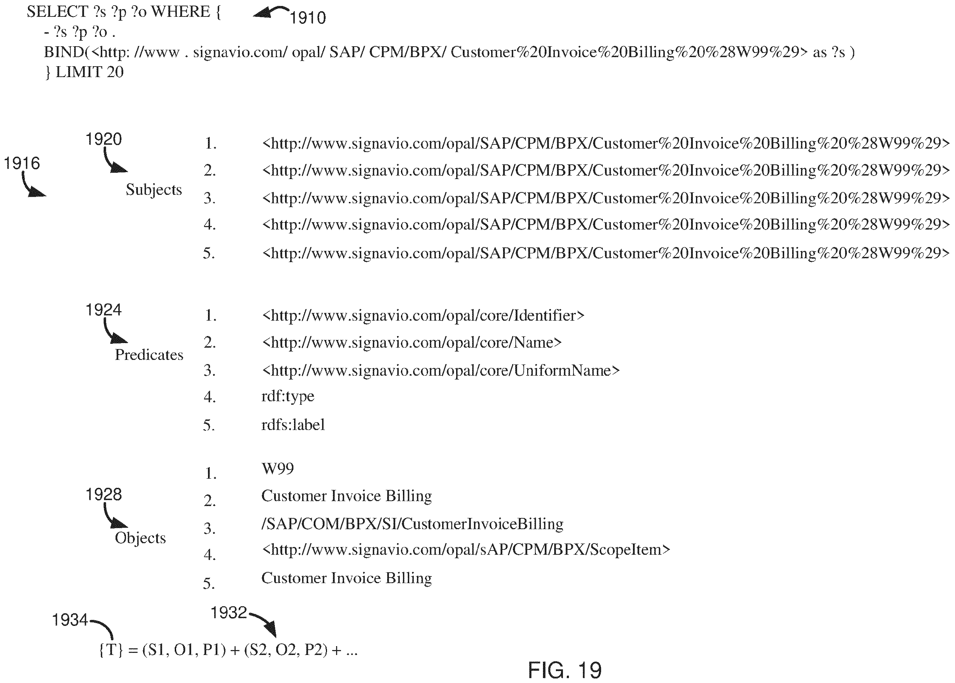

FIG. 19 illustrates an example query 1910 for the present example. It can be seen that the query 1910 is limited to providing 20 results. FIG. 19 also lists query results 1916 in the form of subjects 1920, objects 1924, and predicates 1928 resulting from the query (where each correspondingly numbered subject, object, and predicate correspond to a discrete query result). A set of triples 1934 can be defined as shown at 1932. In this example, the query results can represent results within a one-hop distance of the identified named entity.

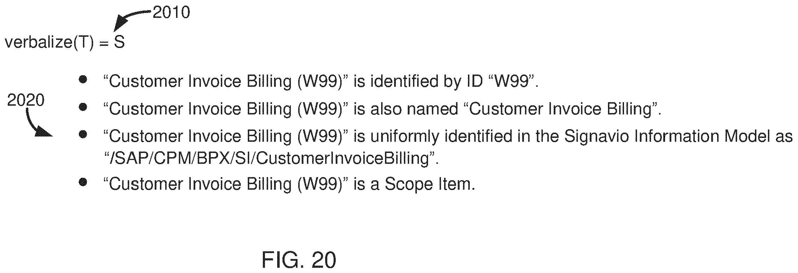

FIG. 20 illustrates a verbalize function 2010 that can be used to process the set of triples 1934. The verbalize function 2010 can be implemented using techniques described in Example 2. The output of the verbalize function 2010 is shown as a set 2020 of verbalized responses corresponding to each triple in the set of triples 1934. The verbalized responses of the set 2020 convey the information of the triples in the set 1934 in a more human understandable format, which is also a format that can be more readily processed by a large language model.

### Example 6- Example Knowledge Graph

FIG. 21 illustrates a simple knowledge graph 2100 used to demonstrate how query results can be determined using an initially defined entity (such as identified using a named entity recognition service) and a particular number of hops that are allowed for the query.

The graph 2100 is formed from nodes 2110, representing entities (which can be either subjects or objects of a triple), and where edges 2114 represent particular relationships (predicates) between two entities.

The nodes 2110 can include nodes that can be associated with more general information that are related to nodes providing more specific information. For example, a node 2110a may represent a book. A book may have particular characteristics or attributes such as a node 2110b representing an author attribute. Although not shown, a book can have other attributes, such as a title, a publication year, or a category or classification (such as fiction or non-fiction). An edge 2114a can indicate the nature of a relationship between the book node 2110a and the author attribute 2110b. For example, the relationship can be "has attribute," from the "viewpoint" of node 2110a, or can be an inverse relationship, such as "attribute of," from the viewpoint of the node 2110b.

Another type of general-specific relationship is illustrated in FIG. 21, in that the book node 2210a and the author node 2110b can have specific instances. That is, the node 2110a, for example, can represent the general concept of a book, while nodes 2110c, 2110d, and 21 10e are specific instances of books. Respective edges 2114b, 2114c, 2114d can represent, from the point of view of the book node 2110a, "has instance," where the inverse relationship can be "instance of." Similarly, the nodes 2110f, 2110g for the author node 2210b can represent particular authors. The book instances 2110c, 2110d, 21 10e can then be linked to their specific author instances 2110f, 2110g, where the respective edges 2114e, 2114f, 2114g can represent has "has author" relationship from the point of view of the book instance, or a "author of" relationship from the point of view of an author instance.

Now, assume a query was received based on a named entity recognition search that identified the entity 2110d. A 1-hop limit can result in the identification of nodes 2110a and 2110f, and so the book instance 2110d can be identified as being of an instance of the book entity 2110, and being authored by the author of node 2110f. However, a one hop limit would not identify that the author 2110f also wrote book instance 2210c. This information would be identified if the hop limit was greater than one.

### Example 7- Example Code Providing for Searching of Knowledge Graph for Nodes Related to Specified Entity

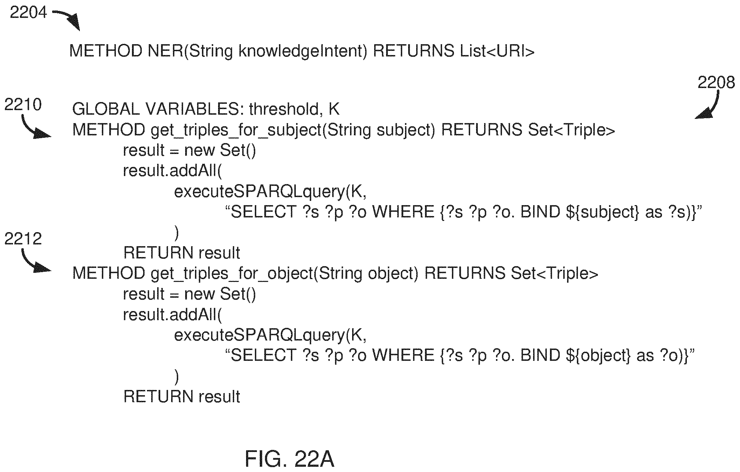

FIGS. 22A-22C provide example pseudocode that can be used in implementing disclosed techniques. In particular, FIG. 22A illustrate a function 2204 that can be used to call a named entity recognition service to return URIs for entities identified in particular user input intended for a large language model.

Code 2208 includes functions 2210 and 2212, designed to retrieve relevant triples for a specified entity identified through function 2204. Function 2210 gathers triples where the entity serves as the subject, and function 2212 identifies triples where the entity serves as the object. Code 2208 corresponds to a one-hop search.

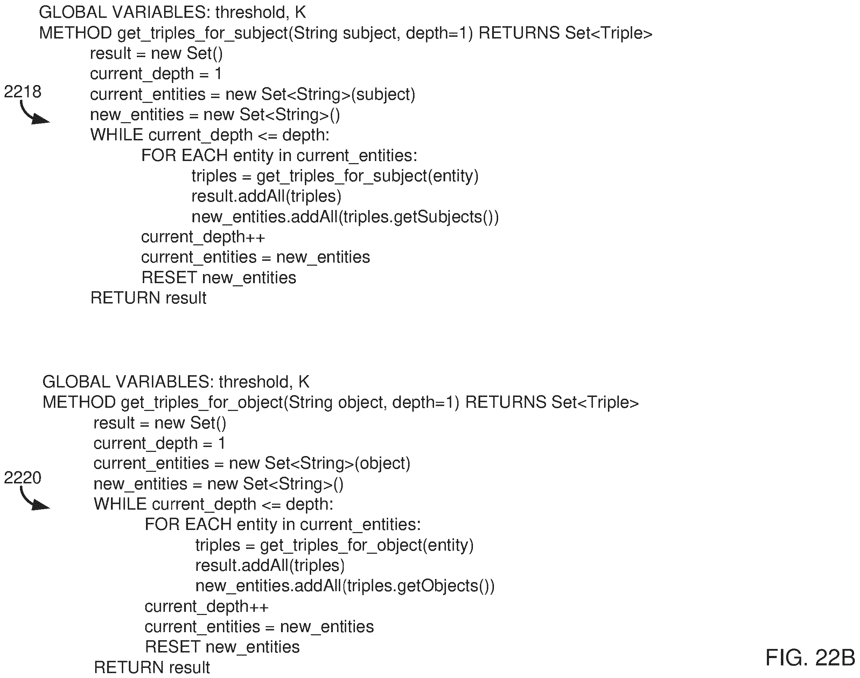

In FIG. 22B, code 2218 and 2220 demonstrate how triples that are more than one hop away from a specified entity can be identified. It achieves this by calling functions 2210 and 2212 from code 2208 during a WHITE loop, which in turn identify triples for the initial entity and entities within a certain number of hops. The "depth" variable in code 2218 and 2220 controls the extent of traversal. Setting it to one, as shown, leads to a single iteration of the loop, effectively mirroring the functionality of functions 2210 and 2212. A larger "depth" value provides more results by extending the traversal.

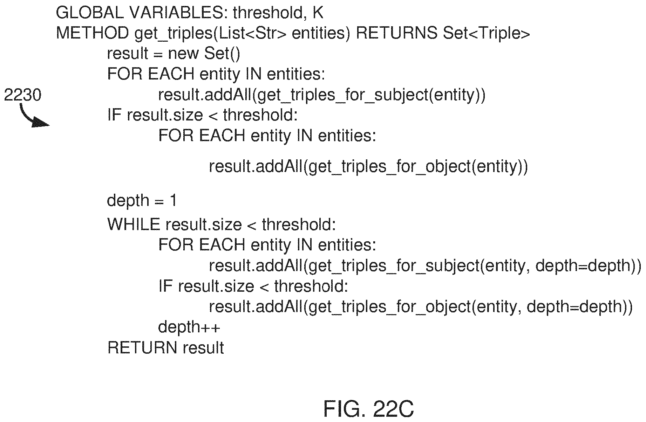

Code 2230 of FIG. 22C identifies both subject triples and object triples for a given set of entities. The code 2230 operates within a specific hop level, determined by the value of the "depth" variable. Initially, the code 2230 retrieves triples where the entities serve as subjects. If the total number of triples collected so far is below a predefined "threshold," the code 2230 proceeds to retrieve triples where the entities serve as objects. The hop level is set to 1 at this stage.

Subsequently, the code 2230 enters a loop that continues as long as the number of collected triples is below the threshold. Within the loop, the code iterates over each entity in the given set and retrieves triples where those entities serve as subjects. If the threshold is still not met, the code retrieves triples where the entities serve as objects. After each iteration, the depth variable is incremented, allowing for traversal to deeper levels of the graph.

### Example 8- Example Computing Environment Having Orchestrator for Modifying User Input to a Large Language Model

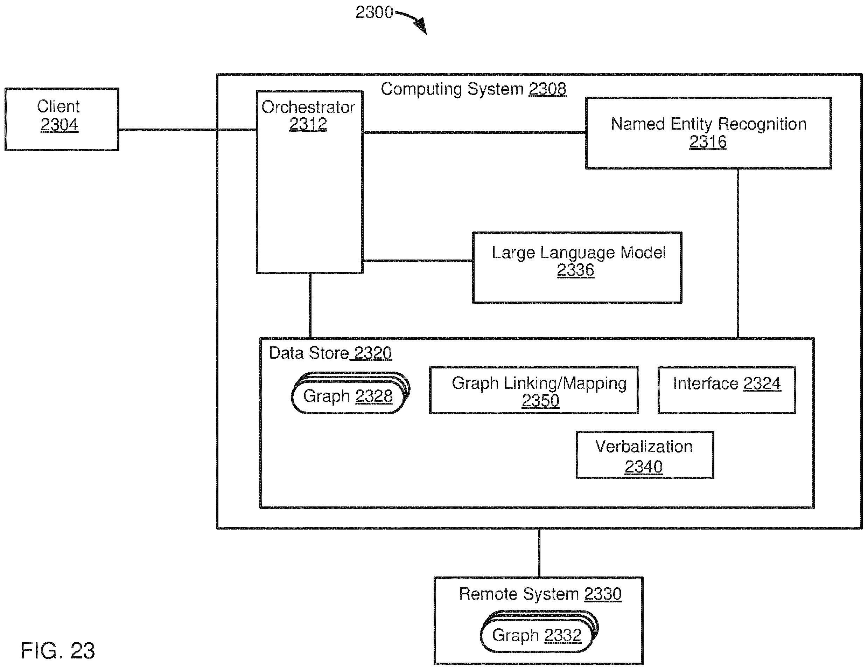

FIG. 23 provides an example computing environment 2300 in which disclosed techniques can be implemented. The computing environment 2300 includes a client 2304 that interacts with a computing system 2308 that is configured to provide large language model responses to input received from the client 2304.

The computing system 2308 includes an orchestrator component 2312. The orchestrator component 2312 can be responsible for receiving user input from the client 2304, providing an answer back to the client, and calling other components of the computing system 2308 to generate the answer, such as components that perform at least certain operations in the process 1710 of FIG. 17.

In particular, the orchestrator component 2312 can be configured to provide the user input to a named entity recognition service 2316. The named entity recognition service 2316 can provide identified entities to the orchestrator component 2312. The orchestrator component 2312 can then query a data store 2320 to obtain information in the data store relevant to the entities identified by the named entity recognition service 2316. For example, the orchestrator component 2312 can call an interface 2324 of the data store 2320 to provide a query of a knowledge graph 2328.

While the present disclosure has generally described the use of a single knowledge graph, it should be appreciated that multiple knowledge graphs can be available, and in at least some cases multiple graphs can be searched for entities usable to supplement/modify user input to a large language model. Accordingly, a plurality of knowledge graphs 2328 are illustrated in FIG. 23. If multiple graphs 2328 are used, the search results from the multiple graphs can be combined, such as with a UNION operation. Hop limits for searches can be the same for the graphs 2328 used in a search, or different graphs can have different search limits. When a maximum number of results to be accepted is limited, separate limits can be provided for each of the graphs 2328 being used, or an overall limit for all graphs can be specified.

Although graphs 2328 can be located on the computing system 2308, in other cases the computing system can access graphs 2332 of a remote system 2330. When multiple graphs are searched, the graphs can be located on the computing system 2308, at one or more remote systems 2330, or a combination of one or more graphs 2328 of the computing system 2308 and one or more graphs 2332 of one or more remote systems. In addition, as described, knowledge graphs are a particular semantic framework that is described to illustrate disclosed techniques. Some of all of the knowledge graphs 2328, 2332 can instead be other types of semantic frameworks, and a given use case can include semantic frameworks that are all of the same type, or can use semantic frameworks of different types.

Optionally, a particular use case can be configured to use specified one or more knowledge graphs 2328. That is, for example, functionality for performing disclosed innovations can be relatively standardized, where a given use of the functionality is configured by providing an identifier of the relevant knowledge graph or graphs 2328, 2332 for the scenario. Configuration can also include specifying any instructions that should be added to modified user input, including modifying any default instructions that may be provided.

Results from the query can be provided by the data store 2320 to the orchestrator component 2312, which can then create an updated prompt that is submitted to a large language model 2336. In some cases, the results from the query can be verbalized, such as into a form that complies with a grammar of a particular human language, such as by a verbalization component 2340 of the data store 2320. In other cases, the verbalization component 2340 can be part of the orchestrator component 2312, or can be another component (including being a subcomponent of a larger component) that is otherwise available to the orchestrator component 2312.

The orchestrator component 2312 receives an answer to the updated prompt, and can provide the answer to the client 2304. In some cases, prior to being provided to the client 2304, the answer can be processed by the named entity recognition service 2316 to identity entities in the response, such as using the interface 2324. The named entity recognition service 2316 then identity relevant entities in the knowledge graph 2328, and the answer can be modified to link to such entities. Alternatively, the named entity recognition service 2316 provides identified entities to another component, such as the orchestration component 2312, and such other component can access the data store 2320 to identify relevant entities/information and to modify the answer to include links to such relevant entities/information.

The submission of a response from the large language model 2336 to modified user input to the named entity recognition service 2316 can be performed by a graph linking/mapping component 2350. The graph linking/mapping component 2350 can also be responsible for inserting linking functionality in the response from the large language model 2336, and optionally for processing a request in response to user selection of a link. The links can be established using techniques such as hyperlink markup, CSS styling, or event handling (such as using a "clickable text" class defined in a language such as JAVASCRIPT or PYTHON, or techniques similar thereto).

### Example 9- Example Operations

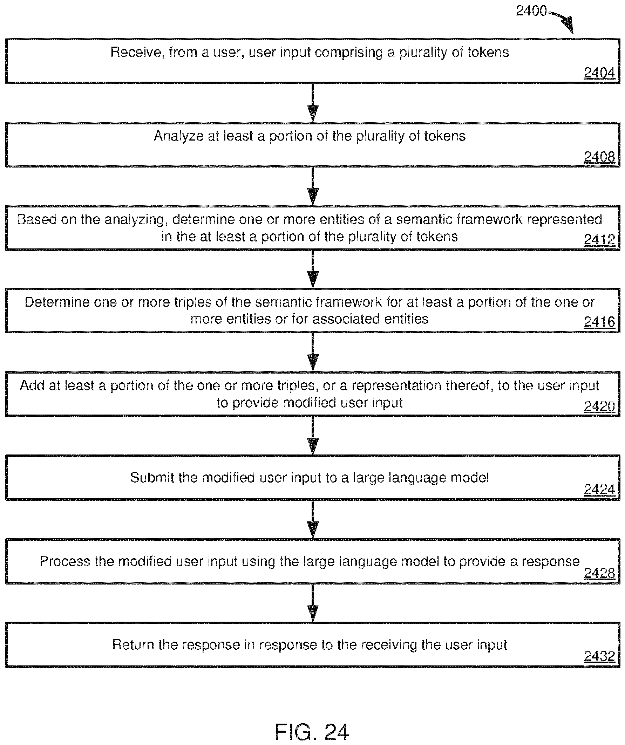

FIG. 24 provides a flowchart of a process 2400 of modifying user input to a large language model to include supplemental facts for use by the large language model prior to submitting the user input to the large language model. At 2404, user input is received from a user. The user input includes a plurality of tokens. At least a portion of the plurality of tokens are analyzed at 2408. Based on the analyzing, at 2412, one or more entities of a semantic framework are determined that are represented in the at least a portion of the plurality of tokens. At 2416, one or more triples of the semantic framework are determined for at least a portion of the one or more entities or for associated entities. At least a portion of the one or more triples, or a representation thereof, is added to the user input to provide modified user input at 2420. The modified user input is submitted to a large language model at 2424. At 2428, the modified user input is processed using the large language model to provide a response. The response is returned at 2432 in response to the receiving the user input.

### Example 10 - Computing Systems

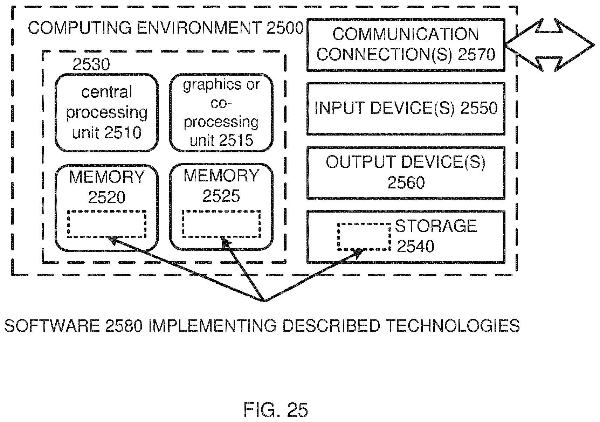

FIG. 25 depicts a generalized example of a suitable computing system 2500 in which the described innovations may be implemented. The computing system 2500 is not intended to suggest any limitation as to scope of use or functionality of the present disclosure, as the innovations may be implemented in diverse general-purpose or special-purpose computing systems.

With reference to FIG. 25, the computing system 2500 includes one or more processing units 2510, 2515 and memory 2520, 2525. In FIG. 25, this basic configuration 2530 is included within a dashed line. The processing units 2510, 2515 execute computer-executable instructions, such as for implementing technologies described in Examples 1-9. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 25 shows a central processing unit 2510 as well as a graphics processing unit or co-processing unit 2515. The tangible memory 2520, 2525 may be volatile memory (e.g., registers, cache, RAM), non-volatile memory (e.g., ROM, EEPROM, flash memory, etc.), or some combination of the two, accessible by the processing unit(s) 2510, 2515. The memory 2520, 2525 stores software 2580 implementing one or more innovations described herein, in the form of computer-executable instructions suitable for execution by the processing unit(s) 2510, 2515.

A computing system 2500 may have additional features. For example, the computing system 2500 includes storage 2540, one or more input devices 2550, one or more output devices 2560, and one or more communication connections 2570. An interconnection mechanism (not shown) such as a bus, controller, or network interconnects the components of the computing system 2500. Typically, operating system software (not shown) provides an operating environment for other software executing in the computing system 2500, and coordinates activities of the components of the computing system 2500.

The tangible storage 2540 may be removable or non-removable, and includes magnetic disks, magnetic tapes or cassettes, CD-ROMs, DVDs, or any other medium which can be used to store information in a non-transitory way, and which can be accessed within the computing system 2500. The storage 2540 stores instructions for the software 2580 implementing one or more innovations described herein.

The input device(s) 2550 may be a touch input device such as a keyboard, mouse, pen, or trackball, a voice input device, a scanning device, or another device that provides input to the computing system 2500. The output device(s) 2560 may be a display, printer, speaker, CD-writer, or another device that provides output from the computing system 2500.

The communication connection(s) 2570 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 11 - Cloud Computing Environment

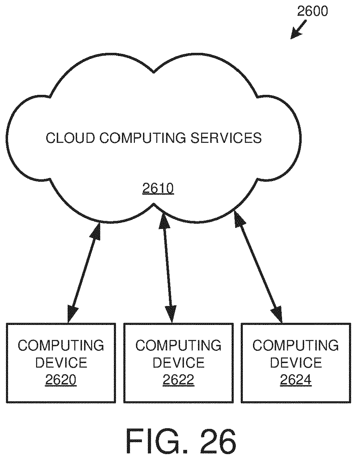

FIG. 26 depicts an example cloud computing environment 2600 in which the described technologies can be implemented. The cloud computing environment 2600 comprises cloud computing services 2610. The cloud computing services 2610 can comprise various types of cloud computing resources, such as computer servers, data storage repositories, networking resources, etc. The cloud computing services 2610 can be centrally located (e.g., provided by a data center of a business or organization) or distributed (e.g., provided by various computing resources located at different locations, such as different data centers and/or located in different cities or countries).

The cloud computing services 2610 are utilized by various types of computing devices (e.g., client computing devices), such as computing devices 2620, 2622, and 2624. For example, the computing devices (e.g., 2620, 2622, and 2624) can be computers (e.g., desktop or laptop computers), mobile devices (e.g., tablet computers or smart phones), or other types of computing devices. For example, the computing devices (e.g., 2620, 2622, and 2624) can utilize the cloud computing services 2610 to perform computing operators (e.g., data processing, data storage, and the like).

### Example 12 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 25, computer-readable storage media include memory 2520 and 2525, and storage 2540. The term computer-readable storage media does not include signals and carrier waves. In addition, the term computer-readable storage media does not include communication connections (e.g., 2570).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one memory;
one or more hardware processing units coupled to the at least one memory; and
one or more computer readable storage media storing computer-executable instructions that, when executed, cause the computing system to perform operations comprising:
receiving, from a user, user input comprising a plurality of tokens;
analyzing at least a portion of the plurality of tokens;
based on the analyzing, determining one or more entities of a semantic framework represented in the at least a portion of the plurality of tokens;
determining one or more triples of the semantic framework for at least a portion of the one or more entities or for associated entities;
adding at least a portion of the one or more triples, or a representation thereof, to the user input to provide modified user input;
submitting the modified user input to a large language model;
processing the modified user input using the large language model to provide a response; and
returning the response in response to the receiving the user input.

2. The computing system of claim 1, wherein the analyzing the at least a portion of the plurality of tokens comprises providing the at least a plurality of tokens to a named entity recognition service.

3. The computing system of claim 1 or 2, wherein adding at least a portion of the one or more triples, or a representation thereof, to the user input to provide modified using input comprises:
submitting triples of the at least a portion of the plurality of triples to a verbalization function to provide the representation, the representation being verbalized triples.

4. The computing system of any one of claims 1 to 3, wherein the semantic framework comprises a knowledge graph.

5. The computing system of any one of claims 1 to 4, the operations further comprising:
identifying one or more associated entities for a subset of the one or more entities by traversing the semantic framework through one or more levels of indirection from each respective entity within the set of associated entities.

6. The computing system of claim 5, wherein the identifying is carried out up to a specified level of indirection; and/or
wherein the identifying is carried out until a threshold number of entities has been identified.

7. The computing system of claim 5 or 6, wherein the triples are in the form of (subject, object, predicate), and the identifying one or more associated entities is carried out for relationships where a respective entity of the one or more entities serves as a subject and for relationships where a respective entity of the one or more entities serves as an object.

8. The computing system of any one of claims 1 to 7, wherein the modified input is not provided to the user; and/or
wherein the user input prior to modification is not provided to the large language model without the content of the modification.

9. The computing system of any one of claims 1 to 8, the operations further comprising:
adding a length constraint to the modified user input; and/or
adding an instruction to the modified user input; and/or
adding a contextual instruction to the modified user input; and/or
adding a content constraint instruction to the modified user input.

10. The computing system of any one of claims 1 to 9, wherein the one or more entities correspond to a first set of one or more entities, the operations further comprising:
identifying a second set of one or more entities in the response;
linking one or more entities of the second set of one or more entities to supplemental content, wherein the displaying the response in response to the user input comprises displaying the response with one or more links to supplemental content;
receiving user input selecting a linked entity; and
displaying the supplemental content for the linked entity.

11. The computing system of any one of claims 1 to 10, wherein the based on the analyzing, determining one or more entities of a semantic framework represented in the at least a portion of the plurality of tokens comprises analyzing multiple discrete semantic frameworks.

12. The computing system of any one of claims 1 to 11, wherein the based on the analyzing, determining one or more entities of a semantic framework represented in the at least a portion of the plurality of tokens comprises sending an analysis request to be executed on a semantic framework located on a remote computing system.

13. A method, implemented in a computing system comprising at least one hardware processor and at least one memory coupled to the at least one hardware processor, the method comprising:
receiving, from a user, user input comprising a plurality of tokens;
analyzing at least a portion of the plurality of tokens;
based on the analyzing, determining one or more entities of a semantic framework represented in the at least a portion of the plurality of tokens;
determining one or more triples of the semantic framework for at least a portion of the one or more entities or for associated entities;
adding at least a portion of the one or more triples, or a representation thereof, to the user input to provide modified user input;
submitting the modified user input to a large language model;
processing the modified user input using the large language model to provide a response; and
returning the response in response to the receiving the user input.

14. The method of claim 13, wherein adding at least a portion of the one or more triples, or a representation thereof, to the user input to provide modified using input comprises:
submitting triples of the at least a portion of the plurality of triples to a verbalization function to provide the representation, the representation being verbalized triples.

15. One or more computer-readable storage media comprising:
computer-executable instructions that, when executed by a computing system comprising at least one hardware processor and at least one memory coupled to the at least one hardware processor, cause the computing system to receive, from a user, user input comprising a plurality of tokens;
computer-executable instructions that, when executed by the computing system, cause the computing system to analyze at least a portion of the plurality of tokens;
computer-executable instructions that, when executed by the computing system, cause the computing system to, based on the analyzing, determine one or more entities of a semantic framework represented in the at least a portion of the plurality of tokens;
computer-executable instructions that, when executed by the computing system, cause the computing system to determine one or more triples of the semantic framework for at least a portion of the one or more entities or for associated entities;
computer-executable instructions that, when executed by the computing system, cause the computing system to add at least a portion of the one or more triples, or a representation thereof, to the user input to provide modified user input;
computer-executable instructions that, when executed by the computing system, cause the computing system to submit the modified user input to a large language model;
computer-executable instructions that, when executed by the computing system, cause the computing system to process the modified user input using the large language model to provide a response; and
computer-executable instructions that, when executed by the computing system, cause the computing system to return the response in response to the receiving the user input.
